# EUROPÄISCHE PATENTSCHRIFT

(11) **EP 2 297 222 B1**
(45) Veröffentlichungstag und Bekanntmachung des Hinweises auf die Patenterteilung: **02.11.2011**
(21) Anmeldenummer: 09780234.2
(22) Anmeldetag: 07.07.2009
(51) Int. Cl.: C08G 61/12

(54) **POLYMERISIERBARE ZUSAMMENSETZUNG ENTHALTEND ANORGANISCHE PARTIKEL MIT ORGANISCHER HÜLLE**
POLYMERIZABLE COMPOSITION CONTAINING INORGANIC PARTICLES HAVING AN ORGANIC SHELL
COMPOSITION POLYMÉRISABLE CONTENANT DES PARTICULES INORGANIQUES À ENVELOPPE ORGANIQUE

(30) Priorität: 07.07.2008 DE 102008031555
(43) Veröffentlichungstag der Anmeldung: 23.03.2011
(73) Patentinhaber: Henkel AG & Co. KGaA, 40589 Düsseldorf (DE)
(72) Erfinder: KREILING, Stefan, 69214 Eppelheim (DE); TADEN, Andreas, 40597 Düsseldorf (DE); SCHÖNFELD, Rainer, 40221 Düsseldorf (DE)
(86) Internationale Anmeldenummer: PCT/EP2009/058575
(87) Internationale Veröffentlichungsnummer: WO 2010/003940

(56) Entgegenhaltungen:
- WO-A1-2007/064801
- WO-A1-2008/060545

## Beschreibung

Die vorliegende Erfindung betrifft eine polymerisierbare Zusammensetzung, die mindestens eine polymerisierbare Benzoxazin-Verbindung und anorganische Nanopartikel enthält, wobei die anorganischen Nanopartikel eine organische Hülle aufweisen. Die organische Hülle umfasst Polymere aus ethylenisch ungesättigten Monomeren, wobei mindestens eines dieser ethylenisch ungesättigten Monomere mindestens eine aromatische Gruppe oder mindestens eine Pyrrolidongruppe umfasst. Weitere Gegenstände der vorliegenden Erfindung sind Klebstoffe, Dichtstoffe oder Beschichtungsmittel, welche die erfindungsgemäße polymerisierbare Zusammensetzung enthalten, sowie die Polymerisationsprodukte der genannten Zusammensetzungen. Weiterhin betrifft die vorliegende Erfindung ein Verfahren zur Herstellung von Polymerisationsprodukten der erfindungsgemäßen Zusammensetzung, wobei die entsprechenden Polymerisationsprodukte eine Schicht oder ein Bündel von Fasern umfassen.

Epoxid-basierte Harzsysteme werden seit langem erfolgreich in der Luftfahrt-, Automobil- oder Elektroindustrie als Klebstoffe, Dichtstoffe oder zur Beschichtung von Oberflächen benutzt oder als Harzsysteme mit einer Reihe unterschiedlicher Materialien für die Herstellung von Verbundwerkstoffen verwendet.

Benzoxazin-basierte Harzsysteme verfügen in der Regel über eine hohe Glasübergangstemperatur und eine hohe mechanische Festigkeit. Weiterhin zeichnen sich die genannten Materialien durch ihre guten elektrischen Eigenschaften und ihr positives Brandschutzverhalten aus. Als nachteilig ist anzusehen, dass die Materialien in der Regel sehr spröde sind und daher für die meisten Anwendungen schlagzähmodfiziert werden müssen.

Benzoxazin-basierte Harzsysteme mit verbesserter Schlagzähmodifizierung sind aus dem Stand der Technik bekannt. So beschreibt das US-Patent US 7157509 thermisch-härtbare Benzoxazin-basierte Zusammensetzungen, die Acrylnitril-Butadien-Copolymere als Zähigkeitsvermittler (toughener) umfassen, wobei das genannte Copolymer über terminale sekundäre Aminogruppen verfügt.
Weiterhin beschreibt die internationale Patentanmeldung WO 2007/064801 eine härtbare Zusammensetzung, enthaltend Benzoxazin-basierte Harzsysteme und bestimmte Addukte als Zähigkeitsvermittler (toughener). Die genannten Addukte werden in zwei Schritten hergestellt. In einem ersten Schritt erfolgt die Umsetzung einer ersten Hydroxygruppen-haltigen Verbindung mit einer Isocyanatgruppen-haltigen Verbindung und einer phenolischen Verbindung, wobei das Reaktionsprodukt in einem zweiten Schritt mit Epoxid-haltigen Verbindungen weiter umgesetzt wird, wodurch das genannte Addukt erhalten wird.

Ein weiterer Vorschlag zur Verbesserung der Schlagzähfestigkeit von Harzsystemen beruht auf der Verwendung von anorganischen Partikeln. So wurden anorganische Partikel bisher sehr erfolgreich als Zähigkeitsvermittler in Epoxid-basierten Harzsystemen eingesetzt.

Aus DE 10 2006 042 796 A1 sind Kleb- oder Dichtstoffe auf Epoxidbasis bekannt, die 5 bis 30 Gew.-% anorganische Partikel enthalten, deren Oberfläche durch Reaktion mit organischen Molekülen belegt wurde. Dabei wurden organische Moleküle ausgewählt, die mindestens zwei endständige funktionelle Gruppen tragen, wobei jede funktionelle Gruppe mindestens ein Heteroatom mit mindestens einem freien Elektronenpaar enthält.

EP 1 715 003 A1 offenbart einkomponentige, wärmehärtende Klebstoff-Zusammensetzungen enthaltend a) mindestens ein bei Raumtemperatur flüssiges Epoxidharz auf Basis von Diclycidylethern des Bisphenols A, b) mindestens ein Copolymer mit einer Glasübergangstemperatur kleiner gleich -30°C und gegenüber Epoxiden reaktiven Gruppen, c) mindestens einen wärmeaktivierbaren Härter und/oder Beschleuniger und d) mindestens ein Organosilan-modifiziertes Siliciumdioxid-Sol. Letzteres ist vorzugsweise mit einem Epoxifunktionellen Silan modifiziert.

WO 2004/111136 A1 offenbart ein nanopartikuläres redispergierbares Zinkoxidpulver und ein Verfahren zu dessen Herstellung, wobei die Zinkoxidpartikel eine Beschichtung mit einer Alkylenethercarbonsäure tragen, deren Moleküle eine Kohlenstoff-Kohlenstoff-Doppelbindung aufweisen.

EP 1469 020 A1 offenbart ein Granulat, enthaltend Kem-Mantel-Partikel, deren Kern aus einem anorganischen Material und dessen Mantel aus einem Polyacrylat, vorzugsweise Polyethylacrylat, Polybutylacrylat, Polymethylmethacrylat und/oder einem Copolymeren hiervon besteht. Gemäß diesem Dokument ist es wichtig, dass ein Unterschied zwischen den Brechungsindizes des Kernmaterials und des Mantelmaterials besteht. Diese Partikel werden insbesondere wegen ihrer optischen Effekte eingesetzt, beispielsweise in Formkörpern oder Folien.

WO 2006/053640 beschreibt Wege, Kern-Mantel-Partikel zu erhalten, die mit großtechnischen Verarbeitungsmethoden verarbeitet werden können und/oder optimierte optische Eigenschaften haben. Hierbei wird ein fester Kern mit einem Mantel aus einem Copolymer beschichtet, welches mindestens ein C₄-C₈-Alkylacrylat und mindestens ein C₄-C₈-Alkyl- oder -Alkyl-aryl-methacrylat als Monomerbausteine enthält.

Kern-Mantel-Partikel sind auch in Benzoxazin-basierten Harzsystemen bekannt. So offenbart die WO 2008/060545 A1 generell die Kombination von Benzoxazin-basierten Harzsystemen und Kern-Mantel-Partikeln, wobei die Kern-Mantel-Partikel eine Verbesserung der Schlagzähigkeit und der Druckfestigkeit des Harzsystems bewirken.

Ungeachtet des Standes der Technik besteht nach wie vor ein Bedürfnis nach neuen und vorteilhaften Zähigkeitsvermittlern für Benzoxazin-basierte Harzsysteme, die eine leichte Formulierbarkeit und gute Kompatibilität mit der Benzoxazinmatrix aufweisen.

Überraschenderweise wurde nun gefunden, dass eine Benzoxazin-basierte Zusammensetzung durch bestimmte Zähigkeitsvermittler in Form von anorganischen Partikeln, die an ihrer Oberfläche mit einer organischen Hülle modifiziert sind, in effektiver Weise schlagzähmodifiziert werden kann, wobei die genannten anorganischen Partikel eine leichte Formulierbarkeit und gute Kompatibilität mit der Benzoxazinmatrix aufweisen und gleichzeitig eine geringe Koagulationstendenz zeigen.

Gegenstand der vorliegenden Erfindung ist daher eine polymerisierbare Zusammensetzung, enthaltend mindestens eine polymerisierbare Benzoxazin-Verbindung und anorganische Partikel, die eine organische Hülle aufweisen, wobei die organische Hülle Polymere umfasst, welche Homo-oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.

Die polymerisierbare Zusammensetzung der vorliegenden Erfindung eignet sich im besonderen Maße zur Herstellung von Klebstoffen, Dichtstoffen oder Beschichtungsmitteln, sowie zur Herstellung von Verbundwerkstoffen, die eine Schicht oder ein Bündel von Fasern, wie beispielsweise Kohlefasern, umfassen.

Daher sind Klebstoffe, Dichtstoffe oder Beschichtungsmittel, welche die erfindungsgemäße polymerisierbare Zusammensetzung umfassen, ebenso Gegenstand der vorliegenden Erfindung wie das Polymerisationsprodukt der erfindungsgemäßen Zusammensetzung und dessen Herstellung, wobei das genannte Polymerisationsprodukt eine Schicht oder ein Bündel von Fasern, wie beispielsweise Kohlefasern, umbettet.

Die polymerisierbare Benzoxazin-Verbindung der vorliegenden Erfindung ist ein Monomer, Oligomer oder Polymer, das zumindest eine Benzoxazingruppe umfasst. Bevorzugte Monomere können vorzugsweise bis zu vier Benzoxazingruppen umfassen, wobei sowohl einzelne Monomere als auch Mischungen von zwei oder mehr Monomeren als Benzoxazin-Verbindung verwendet werden können.

Im Folgenden sind einige polymerisierbare Benzoxazin-Verbindungen aufgeführt, die bis zu vier Benzoxazingruppen umfassen.
Geeignete Benzoxazin-Verbindungen werden vorzugsweise durch Formel (B-I) beschrieben, 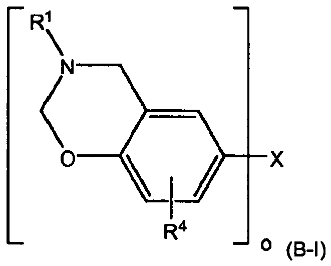 wobei o eine ganze Zahl zwischen 1 und 4 ist, X ausgewählt wird aus der Gruppe bestehend aus Alkyl (für o = 1), Alkylen (für o = 2 bis 4), Sauerstoff (für o = 2), Thiol (für o = 1), Schwefel (für o = 2), Sulfoxid (für o = 2), Sulfon (für o = 2) und einer direkten, kovalenten Bindung (für o = 2), R¹ ausgewählt wird aus der Gruppe bestehend aus Wasserstoff, Alkyl, Alkenyl und Aryl und R⁴ ausgewählt wird aus der Gruppe bestehend aus Wasserstoff, Halogen, Alkyl und Alkenyl oder R⁴ ein divalenter Rest ist, der aus der Benzoxazin-Struktur eine entsprechende Naphthoxazin-Struktur macht.

Besonders bevorzugte Strukturen gemäß Formel (B-I) werden durch Formel (B-II) repräsentiert, 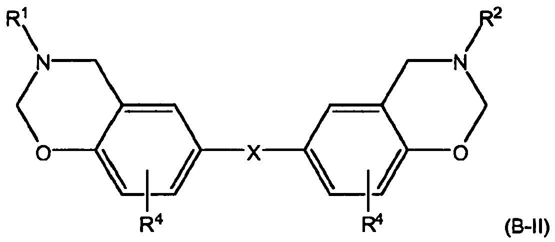 wobei X ausgewählt wird aus der Gruppe bestehend aus CH₂, C(CH₃)₂, C=O, O, S, S=O, O=S=O und einer direkten, kovalenten Bindung, R¹ und R² gleich oder verschieden sind und jeweils ausgewählt werden aus der Gruppe bestehend aus Wasserstoff, Alkyl, insbesondere Methyl, Ethyl, n-Propyl, i-Propyl, n-Butyl oder i-Butyl, Alkenyl, insbesondere Allyl, und Aryl und die Substituenten R⁴ gleich oder verschieden sind und jeweils ausgewählt werden aus der Gruppe bestehend aus Wasserstoff, Halogen, Alkyl und Alkenyl, oder R⁴ jeweils ein divalenter Rest ist, der aus der Benzoxazin-Struktur eine entsprechende Naphthoxazin-Struktur macht.

Bevorzugte Benzoxazin-Verbindungen gemäß Formel (B-II) sind beispielsweise Benzoxazine gemäß Formel (B-III) bis (B-VI), 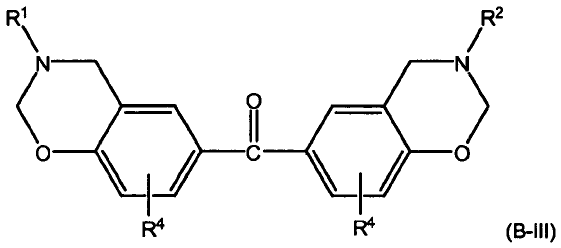 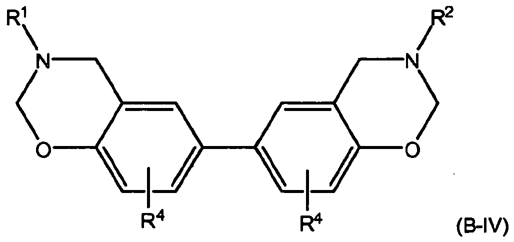 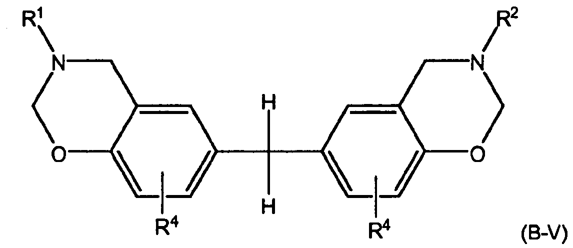 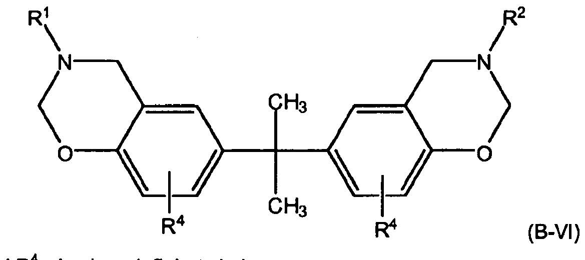 wobei R¹, R² und R⁴ wie oben definiert sind.

Bevorzugte Benzoxazin-Verbindungen sind weiterhin Verbindungen der allgemeinen Formel (B-VII), 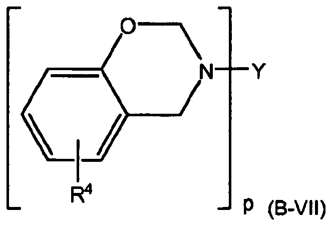 wobei p = 2 ist und Y ausgewählt wird aus der Gruppe bestehend aus Biphenyl, Diphenylmethan, Diphenylisopropan, Diphenylsulfid, Diphenylsulfoxid, Diphenylsulfon, Diphenylketon und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Ebenfalls vevorzugte Benzoxazin-Verbindungen sind weiterhin Verbindungen der allgemeinen Formel (B-VIII) bis (B-X), 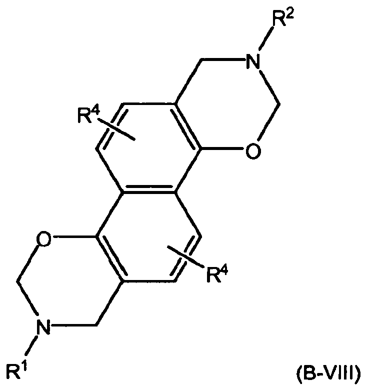 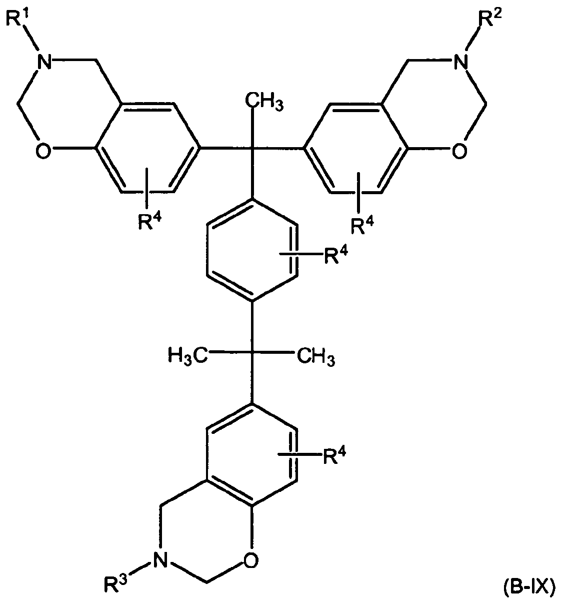 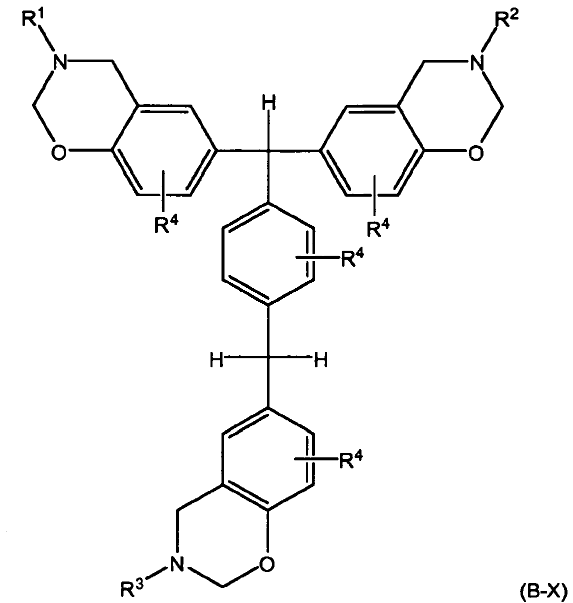 wobei R¹, R² und R⁴ wie oben definiert sind und R³ wie R¹ oder R² definiert ist.

Geeignete Benzoxazin-Verbindungen im Sinne der vorliegenden Erfindung sind beispielsweise die folgenden Verbindungen:

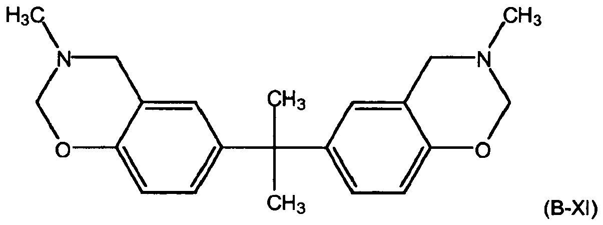

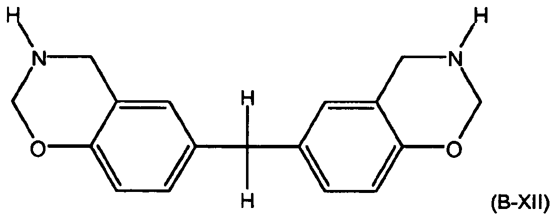

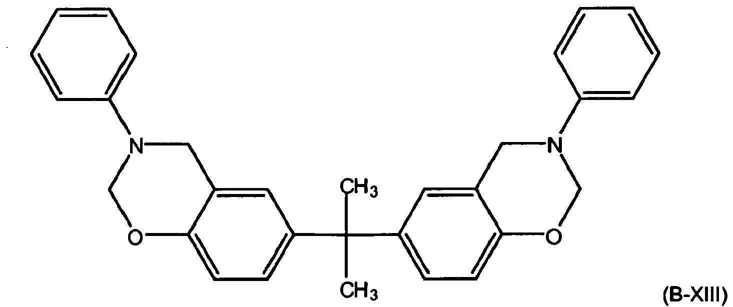

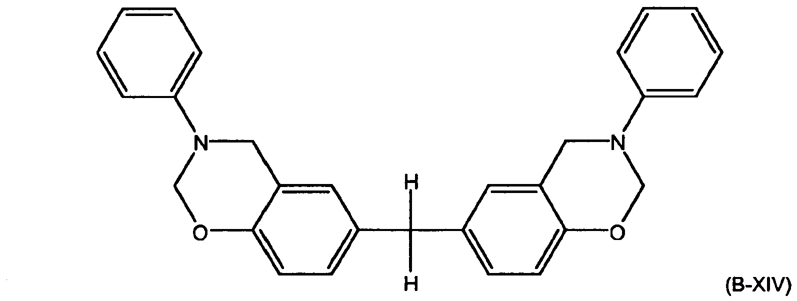

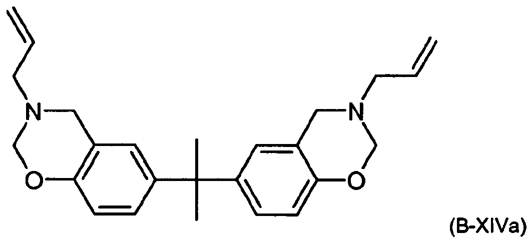

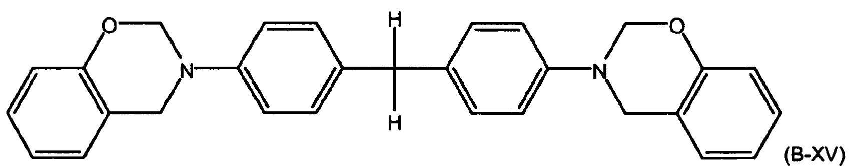

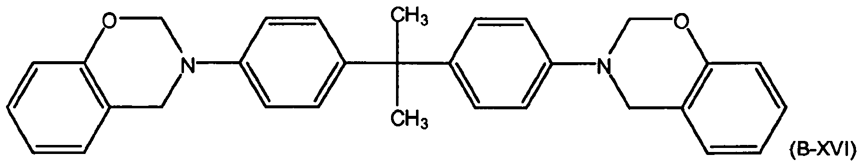

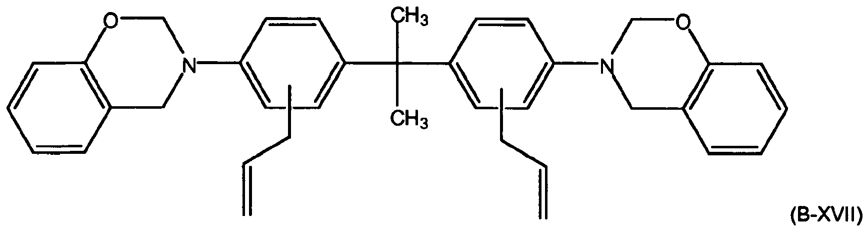

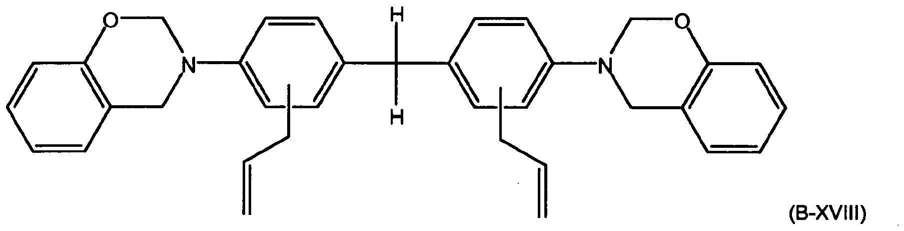

Geeignete Benzoxazin-Verbindungen im Sinne der vorliegenden Erfindung sind sowohl monofunktionelle als auch multifunktionelle Benzoxazin-Verbindungen. Unter monofunktionellen Benzoxazin-Verbindungen sind solche Verbindungen zu verstehen, die nur eine Benzoxazingruppe umfassen, während multifunktionelle Benzoxazin-Verbindungen mehr als eine Benzoxazingruppe umfassen und vorzugsweise bis zur vier Benzoxazingruppen enthalten können.

Beispielhaft können monofunktionelle Benzoxazin-Verbindungen durch die allgemeine Formel (XIX) beschrieben werden, 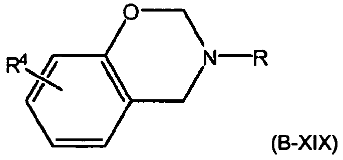 wobei R ausgewählt wird aus der Gruppe bestehend aus Alkyl, insbesondere Methyl, Ethyl, n-Propyl, i-Propyl, n-Butyl, i-Butyl, Alkenyl, insbesondere Allyl, und Aryl, wobei jede der genannten Gruppen gegebenenfalls substituiert ist und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Bevorzugte monofunktionelle Benzoxazin-Verbindungen werden beispielsweise durch die allgemeine Formel (B-XX) beschrieben, 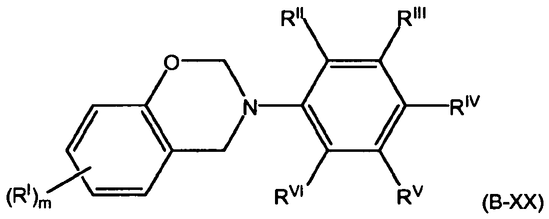 wobei R¹ ausgewählt wird aus der Gruppe bestehend aus Alkyl und Alkenyl, wobei jede der genannten Reste gegebenenfalls substituiert oder unterbrochen ist von einem oder mehreren O, N, S, C=O, COO oder NHC=O oder einer oder mehrerer Arylgruppen, m eine ganze Zahl zwischen 0 und 4 ist und R^{II}, R^{III}, R^{IV}, R^{V} und R^{VI} unabhängig voneinander ausgewählt werden aus der Gruppe bestehend aus Wasserstoff, Alkyl und Alkenyl, wobei jede Alkyl- oder Alkenylgruppe gegebenenfalls substituiert oder unterbrochen ist von einem oder mehreren O, N, S, C=O, COO, oder NHC=O oder einer oder mehrerer Arylgruppen.
Geeignete monofunktionelle Benzoxazin-Verbindungen im Sinne der vorliegenden Erfindung sind beispielsweise die folgenden Verbindungen (B-XXI) und (B-XXII), 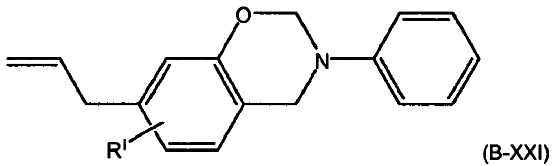 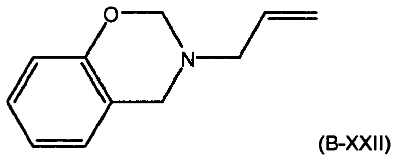 wobei R¹ wie oben definiert ist.

Benzoxazin-Verbindungen im Sinne der vorliegenden Erfindung sind kommerziell erhältlich und werden u.a. von Huntsman Advanced Materials; Georgia-Pacific Resins, Inc. und Shikoku Chemicals Corporation, Chiba, Japan vertrieben.

Ungeachtet dessen können die erfindungsgemäßen Benzoxazin-Verbindungen der vorliegenden Erfindung auch durch Umsetzung einer phenolischen Verbindung, etwa Bisphenol A, Bisphenol F, Bisphenol S oder Thiophenol mit einem Aldehyd, etwa Formaldehyd, in Gegenwart eines primären Alkyl- oder Arylamins erhalten werden.
Geeignete Herstellverfahren werden beispielsweise im US-Patent 5543516, insbesondere in den Beispielen 1 bis 19 in den Spalten 10 bis 14 offenbart, wobei die Reaktionszeit der entsprechenden Umsetzung je nach Konzentration, Reaktivität und Reaktionstemperatur von einigen Minuten bis zu einigen Stunden dauern kann. Weitere Herstellungsmöglichkeiten der erfindungsgemäßen Benzoxazin-Verbindungen der vorliegenden Erfindung können den US-Patenten 4607091, 5021484 und 5200452 und entnommen werden.

Jede der oben gezeigten erfindungsgemäßen Benzoxazin-Verbindungen kann auch teilweise geöffnete Ringstrukturen umfassen, wobei die geöffnete Ringstruktur vorzugsweise durch den formalen Bruch der kovalenten Bindung zwischen A und A oder zwischen B und B' erhalten wird (s. Formel B-O).

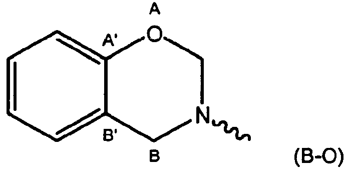

Weitere Beispiele für ringoffene Benzoxazin-Verbindungen sind im Folgenden gezeigt:

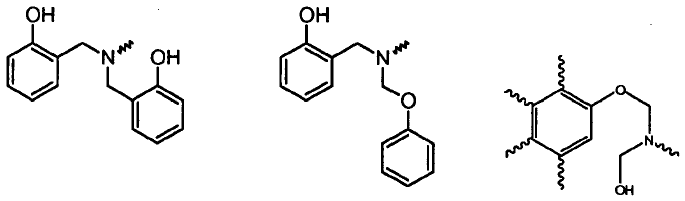

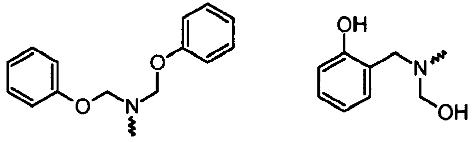

Die ringoffenen Strukturen gelten im Sinne der vorliegenden Erfindung auch als erfindungsgemäße Benzoxazin-Verbindungen, insbesondere als ringoffene Benzoxazin-Verbindungen.

In einer bevorzugten Ausführungsform der Erfindung enthält die polymerisierbare Zusammensetzung mindestens eine polymerisierbare Benzoxazin-Verbindung oder eine Mischung verschiedener polymerisierbarer Benzoxazin-Verbindungen in Mengen von 50 bis 99 Gew.%, vorzugsweise von 70 bis 95 Gew.-% und überaus bevorzugt von 80 bis 90 Gew.-%, jeweils bezogen auf die Gesamtmenge der Zubereitung.

Die erfindungsgemäße polymerisierbare Zusammensetzung umfasst weiterhin als zusätzliche Komponente die bereits genannten anorganischen Partikel, die eine organische Hülle aufweisen, wobei die organische Hülle Polymere umfasst, welche Homo- oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.

Unter einer organischen Hülle ist im Sinne der vorliegenden Erfindung die Oberflächenmodifikation der anorganischen Partikel mit bestimmten Polymeren zu verstehen, wobei die organische Hülle vorzugsweise kovalent an die anorganischen Partikel angebunden ist.

Unter dem Begriff eines "ethylenisch ungesättigten Monomers" sind im Rahmen der vorliegenden Erfindung solche Monomere zu verstehen, die über mindestens eine polymerisierbare Kohlenstoff-Kohlenstoff-Doppelbindung verfügen, wobei die genannte Doppelbindung in mono-, di-, tri- oder tetra-substituierter Form vorliegen kann.

Im Rahmen der vorliegenden Erfindung wird ein ethylenisch ungesättigtes Monomer, das mindestens eine aromatische Gruppe umfasst, als ethylenisch ungesättigtes aromatisches Monomer bezeichnet.

In einer bevorzugten Ausführungsform der Erfindung wird das ethylenisch ungesättigte aromatische Monomer aus ethylenisch einfach ungesättigten Monomeren, umfassend eine aromatische Gruppe, ausgewählt.
Unter ethylenisch einfach ungesättigten Monomeren sind im Sinne der vorliegenden Erfindung solche Monomere zu verstehen, die nur über eine Kohlenstoff-Kohlenstoff Doppelbindung verfügen.
Unter einem ethylenisch ungesättigten Monomer, das mindestens eine Pyrrolidongruppe umfasst, ist im Rahmen der vorliegenden Erfindung besonders bevorzugt N-Vinylpyrrolidon zu verstehen.

Bevorzugte ethylenisch ungesättigte aromatische Monomere werden dabei vorzugsweise ausgewählt aus der Gruppe bestehend aus vinyl-aromatischen Verbindungen und aromatischen Estern von (Meth)acrylsäuren.
Unter dem Begriff "(Meth)acrylsäure" werden im Rahmen der vorliegenden Erfindung sowohl Acrylsäuren als auch Methacrylsäuren verstanden.

Die aromatischen Ester von (Meth)acrylsäuren umfassen dabei vorzugsweise aromatische oder heteroaromatische Reste, wobei die aromatischen oder heteroaromatischen Reste 5 bis 10 Kohlenstoffatome, insbesondere 6 Kohlenstoffatome, umfassen und die genannten Reste jeweils Teil des Alkohols sind, der in einer Veresterungsreaktion mit Acrylsäuren oder Methacrylsäuren zur Herstellung der (Meth)acrylsäureester verwendet wird. Ein besonders bevorzugter Alkohol in diesem Zusammenhang ist Benzylalkohol.

Generell kann der aromatische oder heteroaromatische Rest direkt mit dem Sauerstoffatom (-O-) der Estergruppe (-C(=O)-O-) verknüpft sein. Ungeachtet dessen ist es ebenfalls möglich, dass der aromatische oder heteroaromatische Rest über eine divalente Verknüpfungsgruppe, umfassend 1 bis 8 Kohlenstoffatome, mit dem Sauerstoffatom (-O-) der Estergruppe (-C(=O)-O-) verknüpft ist.

Sofern möglich, können Kohlenstoffatome der divalenten Verknüpfungsgruppe nicht nur durch kovalente Bindungen miteinander verbunden sein, sondern auch durch divalente Heteroatome, beispielsweise ausgewählt aus Sauerstoff und/oder Schwefel.

Bevorzugte vinyl-aromatische Verbindungen umfassen mindestens einen aromatischen oder heteroaromatischen Rest, wobei der aromatische oder heteroaromatische Rest vorzugsweise 5 bis 10 Kohlenstoffatome, insbesondere 6 Kohlenstoffatome umfasst.

Besonders bevorzugte ethylenisch ungesättigte aromatische Monomere werden im Rahmen der vorliegenden Erfindung ausgewählt aus Styrol, Styrolderivaten (z.B. alpha-Alkylstyrolen, wie etwa Methylstyrol), Vinyltoluol, Phenoxyalkylacrylaten, Methacrylaten, wie z.B. Phenylethylmethacrylat, Phenylmethacrylat oder Benzylmethacrylat, oder Acrylaten, wie z.B. Phenylacrylat oder Benzylacrylat. Ganz besonders bevorzugte ethylenisch ungesättigte aromatische Monomere sind Styrol und/oder Benzyl(meth)acrylat, insbesondere Benzylmethacrylat.

In einer bevorzugten Ausführungsform der Erfindung sind die Polymere der organischen Hülle Homopolymere ethylenisch ungesättigter aromatischer Monomere, insbesondere Homopolymere ethylenisch einfach ungesättigter, aromatischer Monomere, insbesondere Homopolymere mindestens einer vinyl-aromatischen Verbindung oder von aromatischen Estern von (Meth)acrylsäuren. Ganz besonders bevorzugte Polymere der Hülle sind Homopolymere von Styrol oder Benzyl(meth)acrylat.

In einer weiteren bevorzugten Ausführungsform der Erfindung sind die Polymere der organischen Hülle Copolymere mindestens zweier ethylenisch ungesättigter aromatischer Monomere, insbesondere Copolymere mindestens zweier ethylenisch, einfach ungesättigter, aromatischer Monomere. Besonders bevorzugte Copolymere der Hülle sind Copolymer aus Styrol und Benzyl(meth)acrylat, wobei das Gewichtsverhältnis zwischen Styrol und Benzyl(meth)acrylat vorzugsweise zwischen 1:1 und 1:50, insbesondere zwischen 1:2 und 1:5 liegt.

In einer ebenfalls bevorzugten Ausführungsform der erfindungsgemäßen polymerisierbaren Zusammensetzung sind die Polymere der organischen Hülle Copolymere aus mindestens einem ethylenisch ungesättigten aromatischen Monomer und mindestens einem ethylenisch ungesättigten nicht-aromatischen Monomer.

Beispiele für ethylenisch ungesättigte nicht-aromatische Monomere sind die im Folgenden genannten Stoffe:
(i) Ester ethylenisch ungesättigter Säuren, wie etwa deren Alkyl- oder Cycloalkylester, wobei die Alkyl- oder Cycloalkylester bis zu 20 Kohlenstoffatome umfassen können. Besonders bevorzugte Alkylester sind beispielsweise die Methyl-, Ethyl-, Propyl-, n-Butyl-, sec-Butyl-, tert-Butyl-, Hexyl-, Ethylhexyl-, Stearyl- und Lauryl-Ester von verschiedenen ethylenisch ungesättigten Säuren, vorzugsweise ausgewählt aus der Gruppe bestehend aus Acrylsäure, Methacrylsäure, Krotonsäure, Ethacrylsäure, Vinylphosphonsäure und Vinylsulfonsäure. Besonders bevorzugte Cycloalkylester sind beispielsweise die Cyclohexyl-, Isobornyl-, Dicyclopentadienyl- und tert-Butylcyclohexyl-Ester verschiedener ethylenisch ungesättigter Säuren, vorzugsweise ausgewählt aus der Gruppe bestehend aus Acrylsäure, Methacrylsäure, Krotonsäure, Ethacrylsäure, Vinylphosphonsäure und Vinylsulfonsäure;
(ii) Monomere, die zumindest eine Hydroxyl- oder Hydroxylmethylamino-Gruppe pro Molekül umfassen, wie etwa Hydroxyalkylester alpha,beta-ungesättigter Carbonsäuren, wie etwa die Hydroxyalkylester von Acrylsäuren, Methacrylsäuren und/oder Ethacrylsäuren, wobei die Hydroxyalkyl-Gruppe bis zu 20 Kohlenstoffatome umfassen kann. Geeignete Hydroxyalkylester sind beispielsweise die 2-Hydroxyethyl-, 2-Hydroxypropyl-, 3-Hydroxypropyl-, 3-Hydroxybutyl-, 4-Hydroxybutyl-Ester von Acrylsäure, Methacrylsäure und/oder Ethacrylsäure; Ester ethylenisch ungesättigter Alkohole, wie z.B. Allylester; Reaktionsprodukte ethylenisch ungesättigter Carbonsäuren mit Glycidylestern alpha-verzweigter Monocarbonsäuren, die 5 bis 18 Kohlenstoffatome umfassen;
(iii) Vinylester alpha-verzweigter Monocarbonsäuren, die 5 bis 18 Kohlenstoffatome umfassen, wie beispielsweise die Vinylester von Monocarbonsäuren mit dem Namen Versatic®-Säure;
(iv) Cyclische und/oder acyclische Olefine, wie beispielsweise Ethylen, Propylen, But-1-en, Pent-1-en, Cyclohexen, Cyclopenten, Norbornen, Butadien, Isopren, Cyclopentadien und/oder Dicyclopentadien;
(v) Amide alpha,beta-ungesättigter Carbonsäuren, wie beispielsweise (Meth)acrylamid, N-Methyl-, N,N-Dimethyl-(Meth)acrylamid, N-Ethyl-(Meth)acrylamid, N,N-Diethyl-(Meth)acrylamid, N-Propyl-(Meth)acrylamid, N,N-Dipropyl-(Meth)acrylamid, N-Butyl-(Meth)acrylamid, N,N-Dibutyl-(Meth)acrylamid und/oder N,N-Cyclohexyl-methyl-(Meth)acrylamid;
(vi) Monomere, die Epoxy-Gruppen umfassen, wie beispielsweise die Glycidylester von Acrylsäure, Methacrylsäure, Ethacrylsäure, Krotonsäure, Maleinsäure, Fumarsäure und/oder Itaconsäure;
(vii) Nitrile, wie beispielsweise Acrylnitril oder Methacrylnitril;
(viii) Vinyl-Verbindungen, beispielsweise ausgewählt aus der Gruppe bestehend aus Vinylhalogeniden, wie etwa Vinylchlorid, Vinylfluorid, Vinylidendichlorid, Vinylidendifluorid; Vinylamiden, Vinylethern, wie etwa n-Propylvinylether, Isopropylvinylether, n-Butylvinylether, Isobutylvinylether oder Vinylcyclohexylether und Vinylestern, wie etwa Vinylacetat, Vinylpropionat und Vinylbutyrat; und
(ix) Allylverbindungen, ausgewählt aus der Gruppe bestehend aus Allylethem und Allylestem, wie etwa Propylallylether, Butylallylether, Allylacetat und Allylpropionat.

Besonders bevorzugte ethylenisch ungesättigte nicht-aromatische Monomere sind die nicht-aromatischen C₂ bis C₈-Ester von Methacrylsäuren, wie beispielsweise, Ethyl-(Meth)acrylat, Propyl-(Meth)acrylat, n-Butyl-(Meth)acrylat, sec-Butyl-(Meth)acrylat, tert-Butyl-(Meth)acrylat und Hexyl-(Meth)acrylat. Ein ganz besonders bevorzugtes ethylenisch ungesättigtes nichtaromatisches Monomer im Sinne der vorliegenden Erfindung ist n-Butylacrylat.

Dabei ist es bevorzugt, dass die Polymere der organischen Hülle, die Copolymere aus mindestens einem ethylenisch ungesättigten aromatischen Monomer und mindestens einem ethylenisch ungesättigten nicht-aromatischen Monomer sind, zu mindestens 20 Gew.%, zu mindestens 40 Gew.-%, zu mindestens 60 Gew.-%, zu mindestens 80 Gew.-%, zu mindestens 95 Gew.-% oder insbesondere zu mindestens 95 Gew.-% aus ethylenisch ungesättigten aromatischen Monomeren bestehen.

Unter einem ethylenisch ungesättigten Monomer, das mindestens eine Pyrrolidongruppe umfasst, ist im Rahmen der vorliegenden Erfindung besonders bevorzugt N-Vinylpyrrolidon zu verstehen.

In einer bevorzugten Ausführungsform der Erfindung sind die Polymere der organischen Hülle Homopolymere ethylenisch ungesättigter Monomere, die mindestens eine Pyrrolidongruppe umfassen. Ganz besonders bevorzugte Polymere der Hülle sind N-Vinylpyrrolidon-Homopolymere.

In einer anderen bevorzugten Ausführungsform der erfindungsgemäßen polymerisierbaren Zusammensetzung sind die Polymere der organischen Hülle Copolymere aus mindestens einem ethylenisch ungesättigten aromatischen Monomer und mindestens einem ethylenisch ungesättigten Monomer, das mindestens eine Pyrrolidongruppe umfasst, wie beispielsweise N-Vinylpyrrolidon.

Dabei ist es bevorzugt, dass die genannten Polymere zu mindestens 5 Gew.%, zu mindestens 20 Gew.-%, zu mindestens 50 Gew.-%, zu mindestens 70 Gew.-%, zu mindestens 90 Gew.-% oder insbesondere zu mindestens 95 Gew.-% aus ethylenisch ungesättigten Monomeren bestehen, die mindestens eine Pyrrolidongruppe umfassen, wie etwa N-Vinylpyrrolidon.

In einer weiteren bevorzugten Ausführungsform der erfindungsgemäßen polymerisierbaren Zusammensetzung sind die Polymere der organischen Hülle Copolymere aus mindestens einem ethylenisch ungesättigten nicht-aromatischen Monomer und mindestens einem ethylenisch ungesättigten Monomer, das mindestens eine Pyrrolidongruppe umfasst, wie beispielsweise N-Vinylpyrrolidon.

Dabei ist es erneut bevorzugt, dass die genannten Polymere zu mindestens 5 Gew.-%, zu mindestens 20 Gew.-%, zu mindestens 50 Gew.-%, zu mindestens 70 Gew.-%, zu mindestens 90 Gew.-% oder insbesondere zu mindestens 95 Gew.% aus ethylenisch ungesättigten Monomeren bestehen, die mindestens eine Pyrrolidongruppe umfassen, wie etwa N-Vinylpyrrolidon.

Die organische Hülle der anorganischen Partikel der erfindungsgemäßen polymerisierbaren Zusammensetzung kann vorzugsweise aus einer Schicht bestehen.
Ebenfalls ist es bevorzugt, dass die organische Hülle der anorganischen Partikel der erfindungsgemäßen polymerisierbaren Zusammensetzung aus mehr als einer Schicht besteht, wobei die einzelnen Schichten sich insbesondere in ihrer chemischen Zusammensetzung unterscheiden können. So sind beispielsweise im Rahmen der vorliegenden Erfindung organische Hüllen bevorzugt, die verschiedene, konzentrisch übereinander angeordnete Schichten unterschiedlicher, insbesondere in der chemischen Zusammensetzung unterschiedlicher Polymere umfassen.

Durch die verschiedenen Schichten können die physikalischen bzw. mechanischen Eigenschaften der beschriebenen anorganischen Partikel in besonders vorteilhafter Weise an ein jeweiliges Aufgabenprofil angepasst werden. So ist es beispielsweise möglich anorganische Partikel aufzubauen, deren Hülle aus mehreren Schichten unterschiedlicher (Co)polymere besteht, wobei sich die genannten (Co)polymere beispielsweise in der Glasübergangstemperatur oder ihren mechanischen Daten unterscheiden, wodurch je nach verwendeter Benzoxazinmatrix eine besonders effektive Schlagzähmodifizierung erreicht wird.

Unter dem Begriff (Co)polymer ist im Rahmend er vorliegenden Erfindung sowohl ein Polymer (Homopolymer) als auch ein Copolymer zu verstehen.

Insbesondere sind polymerisierbare Zusammensetzungen bevorzugt, die anorganische Partikel umfassen, die eine organische Hülle aufweisen, wobei die äußerste Schicht der organischen Hülle aus Polymeren besteht, welche Homo- oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.

Insbesondere sind im Sinne der vorliegenden Erfindung polymerisierbare Zusammensetzungen vorteilhaft, die anorganische Partikel und mindestens eine polymerisierbare Benzoxazin-Verbindung ausgewählt aus den oben genannten N-Alkyl- oder N-Alkenyl-Benzoxazin-Verbindungen enthalten, wobei die anorganischen Partikel eine organische Hülle aufweisen und die organische Hülle Polymere umfasst, welche Homo- oder Copolymere ethylenisch ungesättigter Monomere sind, wobei mindestens eines dieser ethylenisch ungesättigten Monomere mindestens eine aromatische Gruppe umfasst.

Die genannten Partikel sind im besonderen als Zähigkeitsvermittler für N-Alkyl- und/oder N-Alkenyl-Benzoxazin-basierte Harzsysteme geeignet, da die genannten anorganischen Partikel eine sehr leichte Formulierbarkeit und besonders gute Kompatibilität bei geringer Koagulationstendenz in N-Alkyl- und/oder N-Alkenyl-Benzoxazin-basierten Harzsystemen aufweisen.

Unter N-Alkyl- oder N-Alkenyl-Benzoxazin-Verbindungen werden im Sinne der vorliegenden Erfindung vorzugsweise solche Verbindungen verstanden, die mindestens eine Benzoxazingruppe, vorzugsweise zwei Benzoxazingruppen umfassen und in denen das N-Atom des Oxazinrings mindestens einer, vorzugsweise jeder Benzoxazingruppe einen Alkyl- bzw. Alkenylrest trägt.

Besonders bevorzugte N-Alkyl- oder N-Alkenyl-Benzoxazin-Verbindungen werden vorzugsweise durch Formel (B-XXIII) beschrieben, 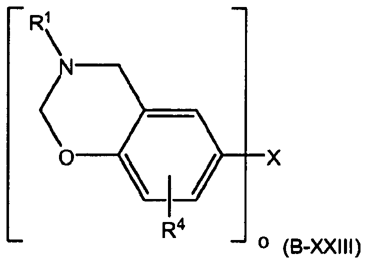 wobei o eine ganze Zahl zwischen 1 und 4 ist, X ausgewählt wird aus der Gruppe bestehend aus Alkyl (für o = 1), Alkylen (für o = 2 bis 4), Sauerstoff (für o = 2), Thiol (für o = 1), Schwefel (für o = 2), Sulfoxid (für o = 2), Sulfon (für o = 2) und einer direkten, kovalenten Bindung (für o = 2), R¹ ausgewählt wird aus der Gruppe bestehend aus Alkyl und Alkenyl und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Besonders bevorzugte Strukturen gemäß Formel (B-XXIII) werden durch Formel (B-XXIV) und (B-XXV) repräsentiert, 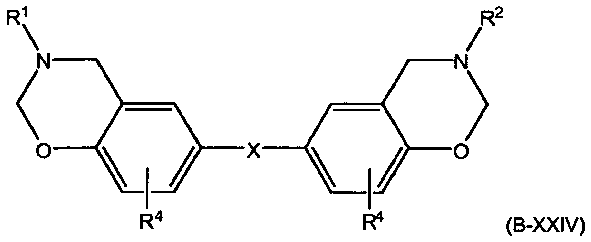 wobei X ausgewählt wird aus der Gruppe bestehend aus CH₂, C(CH₃)₂, C=O, O, S, S=O, O=S=O und einer direkten, kovalenten Bindung, R¹ und R² gleich oder verschieden sind und jeweils ausgewählt werden aus einer Gruppe bestehend aus Alkyl, insbesondere Methyl, Ethyl, n-Propyl, i-Propyl, n-Butyl oder i-Butyl und Alkenyl, insbesondere Allyl und die Substituenten R⁴ gleich oder verschieden sind und jeweils ausgewählt werden aus der Gruppe bestehend aus Wasserstoff, Halogen, Alkyl und Alkenyl, oder R⁴ jeweils ein divalenter Rest ist, der aus der Benzoxazin-Struktur eine entsprechende Naphthoxazin-Struktur macht, 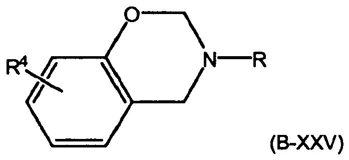 und wobei R ausgewählt wird aus der Gruppe bestehend aus Alkyl, insbesondere Methyl, Ethyl, n-Propyl, i-Propyl, n-Butyl, i-Butyl und Alkenyl, insbesondere Allyl, wobei jede der genannten Gruppen gegebenenfalls substituiert ist und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

In einer bevorzugten Ausführungsform der Erfindung enthält die polymerisierbare Zusammensetzung mindestens eine polymerisierbare Benzoxazin-Verbindung, ausgewählt aus N-Alkenyl- und/oder N-Alkyl-Benzoxazin-Verbindungen und anorganische Partikel, die eine organische Hülle aufweisen, wobei die organische Hülle Polymere umfasst, welche Homo- oder Copolymere ethylenisch einfach ungesättigter aromatischer Monomere sind. Insbesondere kann es sich bei den genannten Homo- oder Copolymeren ethylenisch einfach ungesättigter aromatischer Monomere um Homo- oder Copolymere von vinyharomatischen Verbindungen oder von aromatischen Estern von (Meth)acrylsäuren handeln.

Ganz besonders bevorzugt enthält die polymerisierbare Zusammensetzung eine polymerisierbare Benzoxazin-Verbindung gemäß Formel (B-XI) und anorganischen Partikel, umfassend eine organische Hülle aus Polybenzylmethacrylat.

Weiterhin bevorzugt kann die polymerisierbare Zusammensetzung eine polymerisierbare Benzoxazin-Verbindung gemäß Formel (B-XIVa) und anorganische Partikel, umfassend eine organische Hülle aus Polystyrol, enthalten.

Weiterhin sind im Sinne der vorliegenden Erfindung polymerisierbare Zusammensetzungen vorteilhaft, die anorganische Partikel und mindestens eine polymerisierbare Benzoxazin-Verbindung ausgewählt aus N-Aryl-Benzoxazin-Verbindungen enthalten, wobei die anorganischen Partikel eine organische Hülle aufweisen und die organische Hülle Polymere umfasst, welche Homo- oder Copolymere ethylenisch ungesättigter Monomere sind, wobei mindestens eines dieser ethylenisch ungesättigten Monomere mindestens eine Pyrrolidongruppe umfasst.

Die genannten Partikel sind im besonderen als Zähigkeitsvermittler für N-Aryl-Benzoxazin-basierte Harzsysteme geeignet, da die genannten anorganischen Partikel eine leichte Formulierbarkeit und gute Kompatibilität bei geringer Koagulationstendenz in der genannten Benzoxazinmatrix aufweisen.

Unter N-Aryl-Benzoxazin-Verbindungen werden im Sinne der vorliegenden Erfindung vorzugsweise solche Verbindungen verstanden, die mindestens eine Benzoxazingruppe umfassen und in denen jedes N-Atom des Oxazinrings einen Arylrest trägt. Unter einem Arylrest sind generell solche Reste zu verstehen, in denen das mit dem N-Atom des Oxazinrings verbundene Kohlenstoffatom Teil eines aromatischen Ringsystems ist. Arylreste im Sinne der vorliegenden Erfindung können daher beispielsweise auch Alkyl-substituiert vorliegen oder eine Alkylgruppe umfassen, die mindestens zwei aromatische Reste miteinander verbindet.

Bevorzugte N-Aryl-Benzoxazin-Verbindungen werden beispielsweise durch Formel (B-XXIII) beschrieben, 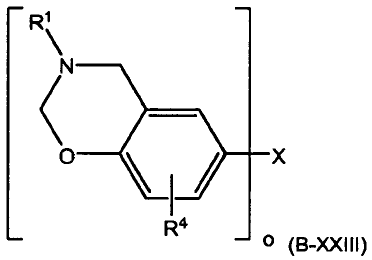 wobei o eine ganze Zahl zwischen 1 und 4 ist, X ausgewählt wird aus der Gruppe bestehend aus Alkyl (für o = 1), Alkylen (für o = 2 bis 4), Sauerstoff (für o = 2), Thiol (für o = 1), Schwefel (für o = 2), Sulfoxid (für o = 2), Sulfon (für o = 2) und einer direkten, kovalenten Bindung (für o = 2), R¹ ausgewählt wird aus der Gruppe bestehend aus Aryl, insbesondere Phenyl und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Weitere bevorzugte N-Aryl-Benzoxazin-Verbindungen werden durch die allgemeinen Formel (B-VII) beschrieben, 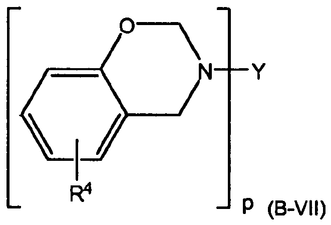 wobei p = 2 ist und Y ausgewählt wird aus der Gruppe bestehend aus Biphenyl, Diphenylmethan, Diphenylisopropan, Diphenylsulfid, Diphenylsulfoxid, Diphenylsulfon, Diphenylketon und R⁴ ausgewählt wird aus der Gruppe bestehend aus Wasserstoff, Halogen, Alkyl und Alkenyl, oder R⁴ ein divalenter Rest ist, der aus der Benzoxazin-Struktur eine entsprechende Naphthoxazin-Struktur macht.

Weiterhin sind im Sinne der vorliegenden Erfindung polymerisierbare Zusammensetzungen vorteilhaft, die anorganische Partikel und mindestens eine polymerisierbare Benzoxazin-Verbindung ausgewählt aus den oben genannten N-Aryl-Benzoxazin-Verbindungen enthalten, wobei die anorganischen Partikel eine organische Hülle aufweisen und die organische Hülle Polymere umfasst, welche Homo- oder Copolymere ethylenisch einfach ungesättigter Monomere sind, wobei mindestens eines dieser ethylenisch einfach ungesättigten Monomere eine Pyrrolidongruppe umfasst.

Ganz besonders bevorzugt enthält die polymerisierbare Zusammensetzung eine polymerisierbare Benzoxazin-Verbindung gemäß Formel (B-XX) und anorganischen Partikel, umfassend eine organische Hülle aus Polyvinylpyrrolidon.

Die Polymere der organischen Hülle sind vorzugsweise unvernetzt oder so schwach vernetzt, dass nicht mehr als 5 % an Monomer-Einheiten einer Kette mit Monomer-Einheiten einer anderen Kette vernetzt sind. Dabei kann es vorteilhaft sein, dass die Polymere in der Nähe der Oberfläche der anorganischen Partikel stärker vernetzt sind als weiter außen in der Hülle. Insbesondere ist die Hülle vorzugsweise so aufgebaut, dass mindestens 80 %, insbesondere mindestens 90 % und besonders bevorzugt mindestens 95 % der Polymerketten mit einem Ende an die Oberfläche der anorganischen Partikel angebunden sind.

Sofern eine Vernetzung gewünscht ist, können geeignete Vernetzungsmittel vorzugsweise ausgewählt werden aus polymerisierbaren Monomeren, die mindestens zwei polymerisierbare Gruppen pro Molekül aufweisen, wie etwa Divinylstyrol. Besonders geeignet sind auch Di-,Tri-, Tetra- und/oder Pentaacrylate, die beispielsweise ausgewählt werden können aus der Gruppe bestehend aus Pentaerythrioltetraacrylat (PETTA), Trimethylolpropantriacrylat (TMPTA), Ditrimethylolpropantetraacrylat (DiTMPTTA), Dipentaerythriolpentaacrylat (DiPEPA) oder Tripropylenglykoldiacrylat (TPGDA) oder aus deren beliebigen Mischungen.

Die organischen Partikel weisen vor dem Aufbringen der Hülle aus organischen Polymeren vorzugsweise eine mittlere Teilchengröße im Bereich von 1 bis 1000 nm, besonders bevorzugt im Bereich von 1 bis 100 nm und nsbesondere im Bereich von 5 mit 30 nm auf.

Unter der mittleren Teilchengröße ist im Sinne der vorliegenden Erfindung vorzugsweise die volumenmittlere Teilchengröße (D 50 Volumenmittel) zu verstehen, die nach üblichen Verfahren, wie beispielsweise durch Lichtstreuung, bestimmt werden kann. Dabei sind unter "Partikel" diejenigen Teilchen zu verstehen, die in der organischen Matrix dispergiert vorliegen. Diese können Agglomerate kleinerer Einheiten darstellen. Das D 50 Volumenmittel ist derjenige Punkt in der Teilchengrößenverteilung, bei dem 50 Vol.-% der Teilchen einen kleineren und 50 Vol.-% der Teilchen einen größeren Durchmesser aufweisen.

Die mittlere Teilchengröße kann dabei besonders bevorzugt durch ein Gerät des Typs Microtrac UPA 250 bestimmt werden.

Die Hülle aus organischen Polymeren weist eine geringere Dichte auf als die anorganischen Partikel selbst. Vorzugsweise hat die Hülle aus organischen Polymeren eine solche Dicke, dass das Gewichtsverhältnis des anorganischen Kerns zur Hülle aus organischen Polymeren im Bereich von 2 : 1 bis 1 : 5, vorzugsweise im Bereich von 3 : 2 bis 1 : 3 liegt. Dies ist durch die Wahl der Reaktionsbedingungen beim Aufwachsen der Hülle aus organischen Polymeren auf die anorganischen Partikel steuerbar.

Allgemein können die anorganischen Partikel ausgewählt sein aus Metallen, Oxiden, Hydroxiden, Carbonaten, Sulfaten und Phosphaten. Dabei können auch Mischformen aus Oxiden, Hydroxiden und Carbonaten, wie beispielsweise basische Carbonate oder basische Oxide vorliegen. Wählt man anorganische Partikel aus Metallen, so kommen vorzugsweise Eisen, Cobalt, Nickel oder Legierungen in Betracht, die zumindest 50 Gew.% aus einem dieser Metalle bestehen. Oxide, Hydroxide oder Mischformen hiervon sind vorzugsweise ausgewählt aus solchen von Silicium, Cer, Cobalt, Chrom, Nickel, Zink, Titan, Eisen, Yttrium, Zirkonium und/oder Aluminium. Auch hiervon sind Mischformen möglich, wie beispielsweise Partikel aus Alumosilikaten oder aus silikatischen Gläsern. Besonders bevorzugt sind Zinkoxid, Aluminiumoxide oder -hydroxide sowie SiO₂ bzw. die als "Kieselsäure" oder angelsächsisch als "silica" bezeichneten Oxidformen des Siliciums. Weiterhin können die anorganischen Partikel aus Carbonaten, wie beispielsweise Calciumcarbonat, oder aus Sulfaten, wie beispielsweise Bariumsulfat, bestehen. Selbstverständlich ist es auch möglich, dass Partikel mit unterschiedlich zusammengesetzten anorganischen Kernen nebeneinander vorliegen.

Während die anorganischen Partikel eine organische Hülle aufweisen, die Polymere umfasst, welche Homo- oder Copolymere ethylenisch ungesättigter Monomere sind, enthält der anorganische Partikel selbst keine Homo- oder Copolymere ethylenisch ungesättigter Monomere.

Zur Herstellung der anorganischen Partikel, die eine Hülle aus organischen Polymeren aufweisen, kann man beispielsweise so verfahren, wie es in der WO 2004/111136 A1 am Beispiel der Belegung von Zinkoxid mit Alkylenethercarbonsäuren beschrieben ist. Gemäß dieser Verfahrensweise suspendiert man die unbehandelten anorganischen Partikel in einem unpolaren oder wenig polaren Lösungsmittel, gibt danach monomere oder präpolymere Bestandteile der Hülle zu, entfernt das Lösungsmittel und startet die Polymerisation, beispielsweise radikalisch oder fotochemisch. Weiterhin kann man analog der in EP 1469 020 A1 beschriebenen Herstellungsweise verfahren, wobei man als organische Beschichtungskomponente für die Partikel Monomere oder Präpolymere des Hüllmaterials einsetzt. Weiterhin ist eine Herstellung der umhüllten Partikel durch "atom transfer radical polymerization" möglich, wie es beispielhaft für die Polymerisation von n-Butylacrylat auf Kieselsäure-Nanopartikel beschrieben wurde in: G. Carrot, S. Diamanti, M. Manuszak, B. Charleux, J.-P. Vairon: "Atom Transfer Radical Polymerization of n-Butyl Acrylate from Silica Nanoparticles", J. Polym. Sci., Part A: Polymer Chemistry, Vol. 39, 4294-4301 (2001).

Weiterhin kann auf Herstellverfahren zurückgegriffen werden, wie sie in der eingangs zitierten WO 2006/053640 beschrieben sind. Für die vorliegende Erfindung sind dabei anorganische Kerne auszuwählen, wie sie in WO 2006/053640 von Seite 5, Zeile 24, bis Seite 7, Zeile 15, mit ihren Herstellverfahren beschrieben sind. Die Beschichtung dieser Kerne erfolgt analog wie in diesem Dokument von S. 10, Zeile 22, bis S 15, Zeile 7 beschrieben. Dabei kann auch dem Vorschlag dieses Dokuments gefolgt werden (Seite 15, Zeilen 9 bis 24), die anorganischen Kerne vor der Aufpolymerisation des Mantels einer Vorbehandlung zu unterziehen. Hierzu heißt es an der genannten Stelle:
"Insbesondere beim Einsatz anorganischer Kerne kann es auch bevorzugt sein, dass der Kern vor der Aufpolymerisation des Mantels einer Vorbehandlung unterzogen wird, die ein Anbinden des Mantels ermöglicht. Dies kann üblicherweise in einer chemischen Funktionalisierung der Partikeloberfläche bestehen, wie sie für die verschiedensten anorganischen Materialen aus der Literatur bekannt ist. Insbesondere bevorzugt kann es dabei sein, auf der Oberfläche solche chemischen Funktionen anzubringen, die als reaktives Kettenende eine Aufpfropfung der Mantelpolymere ermöglichen. Hier sind als Beispiele insbesondere endständige Doppelbindungen, Epoxy-Funktionen, sowie polykondensierbare Gruppen zu nennen. Die Funktionalisierung von Hydroxygruppen-tragenden Oberflächen mit Polymeren ist beispielsweise aus EP-A-337 144 bekannt".

Insbesondere ist es im Sinne der vorliegenden Erfindung bevorzugt die anorganischen Kerne vor der Aufbringung der organischen Hülle durch die Umsetzung mit einem oder mehreren Alkoxysilanen zu modifizieren. Die Alkoxysilane können durch Kondensation an die anorganischen Kerne der vorliegenden Erfindung angebunden werden. Bevorzugte Alkoxysilane weisen mindestens eine polymerisierbare Kohlenstoff-Kohlenstoff-Doppelbindung oder mindestens eine Amino-, Thiol- und/oder Hydroxylgruppe auf.

Die Hülle der beschriebenen anorganischen Partikel kann durch Umsetzung mit einer oder mehreren Verbindungen (Funktionalisierungsreagenz(ien)) modifiziert bzw. weiter funktionalisiert werden. Dies ist besonders vorteilhaft, da durch die weitere Funktionalisierung der Hülle deren Eigenschaftsprofil und deren Oberflächenbeschaffenheit leicht modifiziert werden kann. Auf diese Weise können beispielsweise die mechanischen Eigenschaften der beschriebenen anorganischen Partikel gezielt auf einen bestimmten Aufgabenzweck hin optimiert werden. Ebenfalls kann durch die Funktionalisierung eine bessere Anbindung der beschriebenen Partikel an die Benzoxazinmatrix erreicht werden.

Das Funktionalisierungsreagenz wird dabei vorzugsweise ausgewählt aus der Gruppe bestehend aus (Meth)acrylaten, Acrylat-funktionalisierten Benzoxazin-Verbindungen, Epoxy-Verbindungen, Silanen und Epoxysilanen oder aus deren beliebigen Mischungen.

Besonders bevorzugte Epoxysilane sind dabei Verbindungen der allgemeinen Formel (S-I), 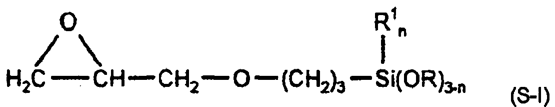 wobei R eine lineare oder verzweigte Alkylgruppe mit 1 bis 4 C-Atomen oder eine Arylgruppe mit 6 bis 12 C-Atomen und R¹ eine lineare oder verzweigte Alkylgruppe mit 1 bis 4 C-Atomen darstellen und n gleich 0 oder 1 oder 2 ist. Insbesondere sind 3-Glycidyloxypropyltrimethoxysilan (GLYMO), 3-Glycidyloxypropyltriethoxysilan (GLYEO), 3-Glycidyloxypropyltri-n-propoxysilan, 3-Glycidyloxypropyltri-iso-propoxysilan, 3-Glycidyloxypropyltri-n-butoxysilan und 3-Glycidyloxypropyltri-iso-butoxysilan oder deren Mischungen bevorzugt. Ein überaus bevorzugtes Epoxysilan im Sinne der vorliegenden Erfindung ist 3-Glycidyloxypropyltrimethoxysilan (GLYMO).

Die erfindungsgemäße polymerisierbare Zusammensetzung kann die beschriebenen anorganischen Partikel, die eine organische Hülle aufweisen, in Mengen von 0,001 bis 60 Gew.-%, vorzugsweise von 1 bis 40 Gew.-% und überaus bevorzugt von 3 bis 20 Gew.-%, jeweils bezogen auf die Gesamtmenge der polymerisierbaren Zusammensetzung, enthalten.

In einer bevorzugten Ausführungsform umfasst die polymerisierbare Zusammensetzung als polymerisierbare Harzkomponente nur eine oder mehrere Benzoxazin-Verbindungen. Für bestimmte Anwendungszwecke kann es aber vorteilhaft sein, dass die polymerisierbare Zusammensetzung neben der oder den genannten Benzoxazin-Verbindung(en) zusätzlich andere Verbindungen umfasst. Geeignete Verbindungen können beispielsweise ausgewählt werden aus der Gruppe der Epoxidharze, Polyurethanharze, Polyesterharze, Polyamidharze oder Phenolharze oder aus deren beliebigen Mischungen.

Unter einem "Epoxidharz" wird im Rahmen der vorliegenden Erfindung eine HarzZusammensetzung verstanden, die auf der Basis von Epoxidverbindungen oder epoxidhaltigen Verbindungen gebildet wird.
In einer bevorzugten Ausführungsform der Erfindung können die Epoxidverbindungen oder epoxidhaltigen Verbindungen des Epoxidharzsystems der polymerisierbaren Zubereitung sowohl oligomere als auch monomere Epoxidverbindungen sowie Epoxide vom polymeren Typ umfassen und können aliphatische, cycloaliphatische, aromatische oder heterocyclische Verbindungen darstellen.
Geeignete Epoxidharze im Rahmen der vorliegenden Erfindung sind beispielsweise vorzugsweise ausgewählt aus Epoxidharzen vom Bisphenol-A-Typ, Epoxidharzen vom Bisphenol-S-Typ, Epoxidharzen vom Bisphenol-F-Typ, Epoxidharzen vom Phenol-Novolak-Typ, Epoxidharzen vom Cresol-Novolak-Typ, epoxidierten Produkten zahlreicher Dicyclopentadien-modifizierter Phenolharze, erhältlich durch Umsetzung von Dicyclopentadien mit zahlreichen Phenolen, epoxidierte Produkte von 2,2',6,6'-Tetramethylbiphenol, aromatische Epoxidharze wie Epoxidharze mit Naphthalin-Grundgerüst und Epoxidharze mit Fluoren-Grundgerüst, aliphatische Epoxidharze wie Neopentylglykoldiglycidylether und 1,6-Hexandioldiglycidylether, alicyclische Epoxidharze wie 3,4-Epoxycyclohexylmethyl-3,4-epoxycyclohexancarboxylat und Bis(3,4-epoxycyclohexyl)adipat, und Epoxidharze mit einem Heteroring wie Triglycidylisocyanurat ein.
Insbesondere umfassen die Epoxidharze zum Beispiel das Reaktionsprodukt aus Bisphenol A und Epichlorhydrin, das Reaktionsprodukt aus Phenol und Formaldehyd (Novolak-Harze) und Epichlorhydrin, Glycidyl Ester sowie das Reaktionsprodukt aus Epichlorhydrin und p-Aminophenol. Weitere bevorzugte Epoxidharze, die kommerziell erhältlich sind, umfassen insbesondere Octadecylenoxid, Epichlorhydrin, Styroloxid, Vinylcyclohexenoxid, Glycidol, Glycidylmethacrylat, Diglycidylether von Bisphenol A (z.B. diejenigen, welche unter den Handelsbezeichnungen "Epon 828", "Epon 825", "Epon 1004" und "Epon 1010" der Hexion Specialty Chemicals Inc., "DER-331", "DER-332", "DER-334", "DER-732" und "DER-736" der Dow Chemical Co. erhältlich sind), Vinylcyclohexendioxid, 3,4-Epoxycyclohexylmethyl-3,4-epoxycyclohexen-carboxylat, 3,4-Epoxy-6-methylcyclohexylmethyl-3,4-epoxy-6-methyl-cyclohexencarboxylat, Bis(3,4-epoxy-6-methylcyclohexylmethyl)adipat, Bis(2,3-epoxy-cyclopentyl)ether, aliphatisches, mit Polypropylenglycol modifiziertes Epoxid, Dipentendioxid, epoxidiertes Polybutadien (z.B. Krasol Produkte von Sartomer), Epoxidfunktionalitaet enthaltendes Siliconharz, flammhemmende Epoxidharze (z.B. "DER-580", ein bromiertes Epoxidharz vom Bisphenol-Typ, welches von Dow Chemical Co. erhaeltlich ist), 1,4-Butandiol-diglycidylether eines Phenolformaldehyd-Novolaks (z.B. "DEN-431" und "DEN-438" der Dow Chemical Co.), sowie Resorcin-diglycidylether (z.B. "Kopoxite" der Koppers Company Inc.), Bis(3,4-epoxycyclohexyl)adipat, 2-(3,4-Epoxycyclohexyl-5,5-spiro-3,4-epoxy)cyclohexan-meta-dioxan, Vinylcyclohexenmonoxid, 1,2-Epoxyhexadecan, Alkylglycidilether wie z.B. C8-C10-Alkyl-glycidylether (z.B. "HELOXY Modifier 7" der Hexion Specialty Chemicals Inc.), C12-C14-Alkyl-glycidylether (z.B. "HELOXY Modifier 8" der Hexion Specialty Chemicals Inc.), Butylglycidylether (z.B. "HELOXY Modifier 61" der Hexion Specialty Chemicals Inc.), Cresylglycidylether (z.B. "HELOXY Modifier 62" der Hexion Specialty Chemicals Inc.), p-tert.-Butylphenyl-glycidylether (z.B. "HELOXY Modifier 65" der Hexion Specialty Chemicals Inc.), polyfunktionelle Glycidylether wie z.B. Diglycidylether von 1,4-Butandiol (z.B. "HELOXY Modifier 67" der Hexion Specialty Chemicals Inc.), Diglycidylether von Neopentylglycol (z.B. "HELOXY Modifier 68" der Hexion Specialty Chemicals Inc.), Diglycidylether von Cyclohexandimethanol (z.B. "HELOXY Modifier 107" der Hexion Specialty Chemicals Inc.), Trimethylolethan-triglycidilether (z.B. "HELOXY Modifier 44" der Hexion Specialty Chemicals Inc.), Trimethylolpropan-triglycidylether (z.B. "HELOXY Modifier 48" der Hexion Specialty Chemicals Inc.), Polyglycidylether eines aliphatischen Polyols (z.B. "HELOXY Modifier 84" der Hexion Specialty Chemicals Inc.), Polyglycoldiepoxid (z.B. "HELOXY Modifier 32" der Hexion Specialty Chemicals Inc.), Bisphenol F-Epoxide (z.B. "EPN-1138" oder GY-281" der Huntsman Int. LLC), 9,9-Bis-4-(2,3-epoxypropoxy)-phenylfluorenon (z.B. "Epon 1079" der Hexion Specialty Chemicals Inc.).
Weitere bevorzugte kommerziell erhältliche Verbindungen sind z. B. ausgewählt aus Araldite^{™} 6010, Araldit^{™} GY-281^{™}, Araldit^{™} ECN-1273, Araldit^{™} ECN-1280, Araldit^{™} MY-720, RD-2 existiert von der Huntsman Int. LLC; DEN^{™} 432, DEN^{™} 438, DEN^{™} 485 von Dow Chemical Co., Epon^{™} 812, 826, 830, 834, 836, 871, 872,1001, 1031 etc. von Hexion Specialty Chemicals Inc. und HPT^{™} 1071, HPT^{™} 1079 ebenfalls von Hexion Specialty Chemicals Inc., als Novolak-Harze weiterhin beispielsweise Epi-Rez^{™} 5132 von Hexion Specialty Chemicals Inc., ESCN-001 von Sumitomo Chemical, Quatrex 5010 von Dow Chemical Co., RE 305S von Nippon Kayaku, Epiclon^{™} N673 von DaiNipon Ink Chemistry oder Epicote^{™} 152 von Hexion Specialty Chemicals Inc..

Insbesondere sind polymerisierbare Zusammensetzungen vorteilhaft, die mindestens ein cycloalipahtisches Epoxidharz umfassen, da die genannten Zusammensetzungen eine geringe Viskosität und gute Verarbeitbarkeit aufweisen.

In einer bevorzugten Ausführungsform umfasst die erfindungsgemäße polymerisierbare Zubereitung eine Mischung mehrerer der genannten Epoxidharze.
Vorzugsweise beträgt der Anteil des Epoxidharzes oder der Mischung mehrerer Epoxidharze an der Gesamtmenge der polymerisierbaren Zusammensetzung 5 bis 50 Gew.-%, besonders bevorzugt 10 bis 30 Gew.% und überaus bevorzugt 20 bis 25 Gew.-%.

In der Regel enthalten die erfindungsgemäßen Zusammensetzungen neben den anorganischen Partikeln der vorliegenden Erfindung weiterhin an sich bekannte Additive, wie beispielsweise Farb- und/oder Füllstoffe, etwa gemahlene oder gefällte Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Zusammensetzungen weitere Additive enthalten, die beispielsweise ausgewählt werden aus. Weichmachern, Reaktivverdünnern, weiteren Zähigkeitsvermittlern, Rheologiehilfsmitteln, Netzmitteln, Alterungsschutzmittenl, Stabilisatoren und/oder Farbpigmenten. Vorzugsweise sind die Zusammensetzungen jedoch frei von Weichmachern.

Vorzugsweise beträgt der Anteil eines oder mehrerer Additive an der Gesamtmenge der polymerisierbaren Zusammensetzung 1 bis 30 Gew.-%, besonders bevorzugt 2 bis 20 Gew.% und überaus bevorzugt 20 bis 25 Gew.-%.

Bevorzugte erfindungsgemäße polymerisierbare Zusammensetzung enthaltend, jeweils bezogen auf die Gesamtmenge der Zusammensetzung:
a) 40 bis 99 Gew.-% mindestens einer polymerisierbaren Benzoxazin-Verbindung, vorzugsweise ausgewählt aus N-Alkyl- oder N-Alkenyl-Benzoxazin-Verbindungen,
b) 1 bis 60 Gew.-%, insbesondere 3 bis 20 Gew.-% anorganische Partikel, die eine organische Hülle aufweisen, wobei die organische Hülle Polymere umfasst, welche Homo- oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.
c) 0 bis 50 Gew.%, insbesondere 10 bis 30 Gew.-% mindestens eines Epoxidharzes, vorzugsweise ausgewählt aus cycloaliphatischen Epoxidharzen und
d) 0 bis 30 Gew.% mindestens eines Additivs.

Ein weiterer Gegenstand der vorliegenden Erfindung ist das Polymerisationsprodukt der erfindungsgemäßen polymerisierbaren Zusammensetzung.

Die Polymerisation der polymerisierbaren Benzoxazin-Verbindung oder der Mischung verschiedener polymerisierbarer Benzoxazin-Verbindungen kann bei erhöhten Temperaturen nach einem selbst-initüerenden Mechanismus (thermische Polymerisation) oder durch Zugabe von kationischen Initiatoren erfolgen.
Geeignete kationische Initiatoren sind beispielsweise Lewissäuren oder andere kationische Initiatoren, wie beispielsweise Metallhalogenide, Organometall-Reagenzien, wie Metalloporphyrine, Methyltosylate, Methyltriflate oder Trifluorsulfonsäuren. Ebenso können basische Reagenzien verwendet werden, um die Polymerisation der polymerisierbaren Benzoxazin-Verbindung oder der Mischung verschiedener polymerisierbarer Benzoxazin-Verbindungen zu initiieren. Geeignete basische Reagenzien können beispielsweise ausgewählt werden aus Imidazol oder Imidazolderivaten.

Vorzugsweise erfolgt die thermische Polymerisation der erfindungsgemäßen polymerisierbaren Zusammensetzung bei Temperaturen von 150 bis 300°C, insbesondere bei Temperaturen von 160 bis 220°C. Durch die Verwendung der oben genannten Initiatoren und/oder anderer Reagenzien kann die Polymerisationstemperatur auch niedriger liegen.

Die mechanischen Daten der erfindungsgemäßen Polymerisationsprodukte zeigen, dass durch die Verwendung der anorganischen Partikel, die eine organische Hülle aufweisen, eine effektive Schlagzähmodifizierung erreicht werden kann. Bemerkenswert ist, dass gegenüber unmodifizierten Polymerisationsprodukten eine signifikante Erhöhung des kritischen Spannungsintensitätsfaktors K1c (Critical Stress Intensity Factor) und der Bruchenergie G1c (Critical Energy Release Rate) bei nahezu gleich bleibender Glasübergangstemperatur, Biegefestigkeit und gleich bleibendem Biegemodul erreicht wird.

In einer bevorzugten Ausführungsform der vorliegenden Erfindung weisen die erfindungsgemäßen Polymerisationsprodukte eine Glasübergangstemperatur von etwa 120 bis etwa 300°C, eine Biegefestigkeit von etwa 50 bis etwa 200 MPa, ein Biegemodul von etwa 1000 bis etwa 5000 MPa, einen kritischen Spannungsintensitätsfaktors K1c von etwa 0.5 bis etwa 4.0 MPa/m² und eine Bruchenergie G1 c von etwa 100 bis etwa 600 J/m² auf.

In einer überaus bevorzugten Ausführungsform der vorliegenden Erfindung weisen die erfindungsgemäßen Polymerisationsprodukte eine Glasübergangstemperatur von etwa 140 bis etwa 220°C, eine Biegefestigkeit von etwa 90 bis etwa 120 MPa, ein Biegemodul von etwa 3000 bis etwa 4500 MPa, einen kritischen Spannungsintensitätsfaktors K1c von etwa 0.7 bis etwa 2.0 MPa/m² und eine Bruchenergie G1c von etwa 120 bis etwa 300 J/m² auf.

Die Glasübergangstemperaturen kann durch Dynamisch-Mechanische Thermo-Analyse (DMTA) von Probenkörper der Größe 35 mm x 10 mm x 3.2 mm bestimmt werden. Die Proben werden dabei von 25°C mit einer Heizrate von 10 °C/min bis zur Endtemperatur von 250°C erwärmt. Die jeweilige Glasübergangstemperatur wird aus dem Maximalwert des Verlustmoduls vs. Temperatur Diagramms erhalten.

Die Biegefestigkeit (flexural strength) and das Biegemodul (flexural modulus) können gemäß ASTM D790 bestimmt werden, wobei jeweils ein Probenkörper der Größe 90 mm x 12.7 mm x 3.2 mm, span = 50.8 mm und eine Geschwindigkeit = 1.27 mm/min benutzt werden kann.

Der kritische Spannungsintensitätsfaktor K1c (Critical Stress Intensity Factor) und die Bruchenergie G1c (Critical Energy Release Rate) können gemäß ASTM D5045-96 unter Verwendung des so genannten "single etch notch bending (SENB)" bestimmt werden, wobei jeweils ein Probenkörper der Größe 56 mm x 12.7 mm x 3.2 mm verwendet werden kann.

In einer bevorzugten Ausführungsform der Erfindung umbettet das erfindungsgemäße Polymerisationsprodukt eine Schicht oder ein Bündel von Fasern, wobei die Fasern vor der Härtung (Polymerisation) mit der erfindungsgemäßen polymerisierbaren Zusammensetzung behandelt werden.

Daher ist ein weiterer Gegenstand der vorliegenden Erfindung ein Verfahren zur Herstellung eines Polymerisationsprodukts der erfindungsgemäßen polymerisierbaren Zusammensetzung, wobei die genannte Zusammensetzung eine Schicht oder ein Bündel von Fasern umbettet und die Fasern vor der Härtung mit der erfindungsgemäßen polymerisierbaren Zusammensetzung behandelt werden.

Das erfindungsgemäße Verfahren umfasst die Schritte:
a) Bereitstellung einer Schicht oder eines Bündels von Fasern;
b) Bereitstellung der erfindungsgemäßen polymerisierbaren Zusammensetzung;
c) Erzeugung eines Verbundsystems durch Behandlung einer Schicht oder eines Bündels von Fasern mit der erfindungsgemäßen polymerisierbaren Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur und erhöhtem Druck ausgesetzt wird.

Die genannten Fasern werden vorzugsweise ausgewählt aus Glasfasern, Kohlefasern, Aramidfasern, Borfasern, Aluminiumoxidfasern, Siliciumcarbidfasern. Es können zwei oder mehr dieser Fasern als Gemisch verwendet werden. Um ein Produkt mit geringerem Gewicht und höherer Haltbarkeit herzustellen, ist die Verwendung von Kohlefasern besonders bevorzugt.

Die Schicht oder das Bündel von Fasern sind im Sinne der vorliegenden Erfindung nicht auf eine bestimmte Form oder Anordnung festgelegt, und so können z. B. lange Fasern, die in eine Richtung parallel gelegt sind, Towgame, Gewebe (Stoff), Matten, Strickgewebe, Borten verwendet werden.

Die nach dem genannten Verfahren hergestellten Verbundsysteme in Form von faserverstärkten Verbundwerkstoffen, insbesondere in Form von Prepregs oder Towpregs, können auf Grund ihres geringen Gewichts und der hohen strukturellen Festigkeit beispielsweise im Flugzeugbau oder der Automobilindustrie verwendet werden.

Ein weiterer Gegenstand der vorliegenden Erfindung ist ein Klebstoff, Dichtstoff oder Beschichtungsmittel, umfassend die erfindungsgemäße polymerisierbare Zusammensetzung.

Ebenfalls Gegenstand der vorliegenden Erfindung ist die Verwendung von anorganischen Partikel, die eine organische Hülle aufweisen, wobei die organische Hülle Polymere umfasst, welche Homo- oder Copolymere ethylenisch ungesättigter Monomere sind, wobei mindestens ein ethylenisch ungesättigtes Monomer mindestens eine aromatische Gruppe und/oder mindestens eine Pyrrolidongruppe umfasst, zur Schlagzähmodifizierung eines Polymerisationsproduktes, enthaltend zumindest eine polymerisierbare Benzoxazin-Verbindung in polymerisierter Form.

### Ausführungsbeispiele

### 1) Herstellung der anorganischen Partikel, umfassend eine organische Hülle, durch ATRP (Atom Transfer Radical Polymerization)

### i) Initiatorsynthese

Zu einer Lösung aus 50 mL 5-Hexen-1-ol, 222,5 mL trockenem Dichlormethan, 83,7 mL Triethylamin wurde bei 0 °C 54 mL 2-Brom-2-methylpropionsäurebromid zugetropft. Die Reaktionsmischung wurde 1 h bei 0°C und dann 2,5 h bei Raumtemperatur gerührt. Nach dem Abfiltrieren des entstandenen Triethylhydrobromid-Niederschlags wurde das Zwischenprodukt Hex-5-enyl-2-brom-2-methylpropionat durch Destillation im Hochvakuum isoliert.

6 g Hex-5-enyl-2-brom-2-methylpropionat, 30,0 mL Dichlordimethylsilan und 500 µL Karstedts Katalysator (Platindivinyltetramethylsiloxan-Komplex in Xylol, ∼2,1 - 2,4 Gew.% Pt) wurden unter Lichtausschluss und Schutzgasatmosphäre 1 h bei 40°C und dann 12 h bei Raumtemperatur gerührt. Zur Reinigung des resultierenden Initiators wurde der Katalysator abfiltriert und überschüssiges Dichlordimethylsilan im Vakuum entfernt.

### ii) Anbindung des Initiators an Silica-Partikel

Zu 50 mL einer Silica-Nanopartikel-Lösung (15 Gew.-% Silica-Nanopartikel, mittlerer Teilchendurchmesser = 12 nm (D 50 Volumenmittel)) in DMF wurden 1,25 g des gemäß 1 i) hergestellten Initiators gegeben. Anschließend erfolgte die tropfenweise Zugabe von 6,25 mL Triethylamin. Die Reaktionsmischung wurde unter einer Schutzgasatmosphäre 12 Stunden lang gerührt. Die Nanopartikel wurden durch Soxhlet-Extraktion von den Ausgangsstoffen befreit (unter Rückfluss mit einer Lösungsmittelmischung aus Dichlormethan/Diethylether (50/50 v/v)) und dann in 50 mL DMF redispergiert.

### iii) Beispiel 1: ATR-Polymerisation von Benzylmethacrylat ausgehend von Initiator-modifizierten Nanopartikeln

Unter einer Schutzgasatmosphäre wurden 0,06 g Kupfer(I)-Bromid, 16,95 mL Benzylmethacrylat und 0,1 mL PMDETA (Pentamethyldiethylentriamin) in einem Reaktionskolben bei Raumtemperatur gerührt bis eine homogene Lösung entstand. Danach wurden 50 mL der gemäß 1 ii) hergestellten modifizierten Nanopartikel-Lösung in DMF hinzugefügt. Die ATR-Polymerisation wurde bei 50°C für 8 h durchgeführt und anschließend wurde die Lösung der Polybenzylmethacrylat-modifizierten Nanopartikel durch Dialyse in DMF (cutoff 12-14 kDa) gereinigt.

### iv) Beispiel 2: ATR-Polymerisation von Styrol ausgehend von Initiator-modifizierten Nanopartikeln

Unter einer Schutzgasatmosphäre wurden 0,06 g Kupfer(I)-Bromid, 11,46 mL Styrol und 0,1 mL PMDETA (Pentamethyldiethylentriamin) in einem Reaktionskolben bei Raumtemperatur gerührt bis eine homogene Lösung entstand. Danach wurden 50 mL der hergestellten modifizierten Nanopartikel-Lösung in DMF hinzugefügt. Die ATR-Polymerisation wurde bei 50°C für 8 h durchgeführt und anschließend wurde die Lösung der Polystyrol-modfizierten Nanopartikel durch Dialyse in DMF (cutoff 12-14 kDa) gereinigt.

### v) Herstellung einer polymerisierbaren Zusammensetzung aus einer polymerisierbaren Benzoxazin-Verbindung und Polymer-modifizierten Silica-Nanopartikeln

Zu einer Lösung aus 150 g polymerisierbarer Benzoxazin-Verbindung in 500 mL DMF wurden 50 mL einer Dispersion von Polymer-modifizierten-Silicananopartikeln in DMF (15 Gew.-% modifizierte Nanopartikel, bezogen auf die Gesamtmenge der Dispersion) hinzugegeben. Das Lösungsmittel DMF wurde im Hochvakuum abdestilliert.

Als polymerisierbare Benzoxazin-Verbindungen wurden die folgenden Verbindungen verwendet:

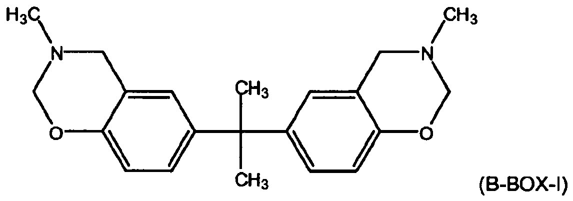

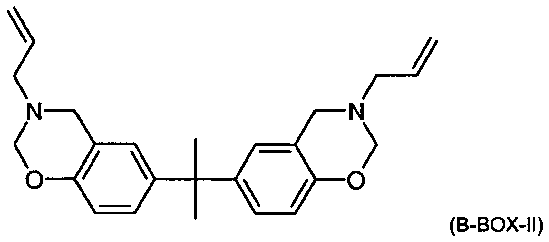

**Tabelle 1: Polymerisierbare Zusammensetzung**

| Probe | Benzoxazin-Verbindung | Benzoxazin-Verbindung in Gew.-%^{[a]} | Polybenzylmethacrylat-Silica-Nanopartikel in Gew.-%^{[a]} (Beispiel 1) | Polystyrol-Silica-Nanopartikel in Gew_{.}-%^{[a]} (Beispiel 2) |
|---|---|---|---|---|
| 1 (Ref.) | B-BOX-I | 100 | - | - |
| 2 | B-BOX-I | 95 | 5 | - |
| 3 | B-BOX-I | 90 | 10 | - |
| 4 (Ref.) | B-BOX-II | 100 | - | - |
| 5 | B-BOX-II | 95 | - | 5 |
| 6 | B-BOX-II | 90 | - | 10 |

| | | | | |
|---|---|---|---|---|
| [a] Bezogen auf die Gesamtmenge der polymerisierbaren Zusammensetzung | | | | |

Die polymerisierbaren Zusammensetzungen aus Tabelle 1 wurden in einer geschlossenen Form in einem Umluftofen bei einer Temperatur von 180°C für 3 Stunden gehärtet. Anschließend wurden die Polymerisationsprodukte aus der Form gelöst und auf Raumtemperatur abgekühlt. Die erhaltenen Polymerisationsprodukte zeichnen sich im Besonderen durch ihre hohe Schlagzähigkeit und Druckfestigkeit und ihr vorteilhaftes Ermüdungsverhalten aus.

## Patentansprüche

1. Polymerisierbare Zusammensetzung, enthaltend
a) mindestens eine polymerisierbare Benzoxazin-Verbindung und
b) anorganische Partikel, die eine organische Hülle aufweisen, wobei die organische Hülle Polymere umfasst, welche Homo- oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.

2. Zusammensetzung nach Anspruch 1, **dadurch gekennzeichnet, dass** die organische Hülle aus mehr als einer Schicht besteht.

3. Zusammensetzung nach mindestens einem oder beiden der Ansprüche 1 und 2, **dadurch gekennzeichnet, dass** die äußerste Schicht der organischen Hülle aus Polymeren besteht, welche Homo- oder Copolymere ethylenisch ungesättigter Monomere sind, wobei mindestens eines dieser ethylenisch ungesättigten Monomere mindestens eine aromatische Gruppe und/oder mindestens eine Pyrrolidongruppe umfasst.

4. Zusammensetzung nach mindestens einem der Ansprüche 1 bis 3, enthaltend
a) mindestens eine polymerisierbare Benzoxazin-Verbindung ausgewählt aus N-Alkyl- oder N-Alkenyl-Benzoxazin-Verbindungen und
b) anorganische Partikel, die eine organische Hülle aufweisen, wobei die organische Hülle Polymere umfasst, welche Homo- oder Copolymere ethylenisch ungesättigter Monomere sind, wobei mindestens eines dieser ethylenisch ungesättigten Monomere mindestens eine aromatische Gruppe umfasst.

5. Zusammensetzung nach mindestens einem der Ansprüche 1 bis 4, **dadurch gekennzeichnet, dass** mindestens ein ethylenisch ungesättigtes Monomer ausgewählt wird aus der Gruppe bestehend aus vinyl-aromatischen Verbindungen und aromatischen Estern von (Meth)acrylsäuren.

6. Zusammensetzung nach mindestens einem der Ansprüche 1 bis 3, enthaltend
a) mindestens eine polymerisierbare Benzoxazin-Verbindung ausgewählt aus N-Aryl-Benzoxazin-Verbindungen und
b) anorganische Partikel, die eine organische Hülle aufweisen, wobei die organische Hülle Polymere umfasst, welche Homo- oder Copolymere ethylenisch ungesättigter Monomere sind, wobei mindestens eines dieser ethylenisch ungesättigten Monomere eine Pyrrolidongruppe umfasst.

7. Zusammensetzung nach mindestens einem der Ansprüche 1 bis 6, **dadurch gekennzeichnet, dass** die Polymere der organischen Hülle unvernetzt oder so schwach vernetzt sind, dass nicht mehr als 5 % an Monomer-Einheiten einer Kette mit Monomer-Einheiten einer anderen Kette vernetzt sind

8. Zusammensetzung nach einem oder mehreren der Ansprüche 1 bis 7, **dadurch gekennzeichnet, dass** die anorganischen Partikel vor dem Aufbringen der organischen Hülle eine mittlere Teilchengröße im Bereich von 1 bis 1000 nm, vorzugsweise im Bereich von 5 bis 30 nm aufweisen.

9. Zusammensetzung nach einem oder mehreren der Ansprüche 1 bis 8, **dadurch gekennzeichnet, dass** in den Partikeln das Gewichtsverhältnis des anorganischen Kerns zur organischen Hülle im Bereich von 2 : 1 bis 1 : 5, vorzugsweise im Bereich von 3 : 2 bis 1 : 3 liegt.

10. Zusammensetzung nach mindestens einem der Ansprüche 1 bis 9, **dadurch gekennzeichnet, dass** die anorganischen Partikel ausgewählt sind aus Metallen, Oxiden, Hydroxiden, Carbonaten, Sulfaten und Phosphaten und aus deren beliebigen Mischungen.

11. Zusammensetzung nach mindestens einem der Ansprüche 1 bis 10, **dadurch gekennzeichnet, dass** die Zusammensetzung die anorganische Partikel, die eine organische Hülle aufweisen, von 0,001 bis 60 Gew.-%, vorzugsweise von 1 bis 40 Gew.-% und überaus bevorzugt von 3 bis 20 Gew.-%, jeweils bezogen auf die Gesamtmenge der Zusammensetzung, enthält.

12. Polymerisationsprodukt der Zusammensetzung nach mindestens einem der Ansprüche 1 bis 11.

13. Polymerisationsprodukt nach Anspruch 12, **dadurch gekennzeichnet, dass** das genannte Polymerisationsprodukt eine Schicht oder ein Bündel von Fasern umbettet, wobei die Fasern vor der Härtung mit einer Zusammensetzung nach mindestens einem der Ansprüche 1 bis 11 behandelt werden.

14. Verfahren zur Herstellung eines Polymerisationsproduktes nach Anspruch 13, umfassend die Schritte:
a) Bereitstellung einer Schicht oder eines Bündels von Fasern;
b) Bereitstellung einer Zusammensetzung nach mindestens einem der Ansprüche 1 bis 11;
c) Erzeugung eines Verbundsystems durch Behandlung einer Schicht oder eines Bündels von Fasern mit der Zusammensetzung;
d) Gegebenenfalls Entfernung einer überschüssigen Menge der polymerisierbaren Zusammensetzung vom Verbundsystem,
wobei das genannte Polymerisationsprodukt erhalten wird, indem das Verbundsystem erhöhter Temperatur und erhöhtem Druck ausgesetzt wird.

15. Klebstoff, Dichtstoff oder Beschichtungsmittel, umfassend eine Zusammensetzung nach mindestens einem der Ansprüche 1 bis 11.

16. Verwendung von anorganischen Partikel, die eine organische Hülle aufweisen, wobei die organische Hülle Polymere umfasst, welche Homo- oder Copolymere ethylenisch ungesättigter Monomere sind, wobei mindestens ein ethylenisch ungesättigtes Monomer mindestens eine aromatische Gruppe und/oder mindestens eine Pyrrolidongruppe umfasst, zur Schlagzähmodifizierung eines Polymerisationsproduktes, enthaltend zumindest eine polymerisierbare Benzoxazin-Verbindung in polymerisierter Form.

## Claims

1. A polymerisable composition, comprising
a) at least one polymerisable benzoxazine compound and
b) inorganic particles that possess an organic shell, wherein the organic shell comprises polymers that are homopolymers or copolymers of ethylenically unsaturated monomers, wherein at least one of said ethylenically unsaturated monomers comprises at least one aromatic group and/or at least one pyrrolidone group.

2. The composition according to claim 1, **characterised in that** the organic shell consists of more than one layer.

3. The composition according to at least one or both of claims 1 and 2, **characterised in that** the outermost layer of the organic shell consists of polymers that are homopolymers or copolymers of ethylenically unsaturated monomers, wherein at least one of said ethylenically unsaturated monomers comprises at least one aromatic group and/or at least one pyrrolidone group.

4. The composition according to at least one of claims 1 to 3, comprising
a) at least one polymerisable benzoxazine compound selected from N-alkyl or N-alkenylbenzoxazine compounds and
b) inorganic particles that possess an organic shell, wherein the organic shell comprises polymers that are homopolymers or copolymers of ethylenically unsaturated monomers, wherein at least one of said ethylenically unsaturated monomers comprises at least one aromatic group

5. The composition according to at least one of claims 1 to 4, **characterised in that** at least one ethylenically unsaturated monomer is selected from the group consisting of vinylaromatic compounds and aromatic esters of (meth)acrylic acids.

6. The composition according to at least one of claims 1 to 3, comprising
a) at least one polymerisable benzoxazine compound selected from N-aryl benzoxazine compounds and
b) inorganic particles that possess an organic shell, wherein the organic shell comprises polymers that are homopolymers or copolymers of ethylenically unsaturated monomers, wherein at least one of said ethylenically unsaturated monomers comprises at least one pyrrolidone group.

7. The composition according to at least one of claims 1 to 6, **characterised in that** the polymers of the organic shell are not crosslinked or so weakly crosslinked that not more than 5 % of monomer units of a chain are crosslinked with monomer units of another chain.

8. The composition according to one or more of claims 1 to 7, **characterised in that** the inorganic particles, prior to being coated with the organic shell, have an average particle size in the range from 1 to 1000 nm, particularly in the range 5 to 30 nm.

9. The composition according to one or more of claims 1 to 8, **characterised in that** the weight ratio of the inorganic core to the shell of the organic polymers in the particles is in the range from 2:1 to 1:5, particularly in the range from 3:2 to 1:3.

10. The composition according to at least one of claims 1 to 9, **characterised in that** the inorganic particles are selected from metals, oxides, hydroxides, carbonates, sulfates and phosphates and from any of their mixtures.

11. The composition according to at least one of claims 1 to 10, comprising the inorganic particles that possess an organic shell in 0.001 to 60 wt.%, preferably 1 to 40 wt.% and most preferably 3 to 20 wt.%, each based on the total amount of the composition.

12. A polymerisation product of the composition according to at least one of claims 1 to 11.

13. The polymerisation product according to claim 12, **characterised in that** said polymerisation product embeds a layer or a bundle of fibres, wherein the fibres are treated with a composition according to at least one of claims 1 to 11 prior to curing.

14. Process for the manufacture of a polymerisation product according to claim 13, including the steps:
a) provision of a layer or a bundle of fibres,
b) provision of a composition according to at least one of claims 1 to 11;
c) production of a composite system by treating a layer or a bundle of fibres with the composition;
d) optionally removing an excess amount of the polymerisable composition from the composite system,
wherein said polymerisation product is obtained, in that the composite system is exposed to increased temperature and increased pressure.

15. An adhesive, sealant or coating, comprising a composition according to at least one of claims 1 to 11.

16. Use of inorganic particles that possess an organic shell, wherein the organic shell comprises polymers that are homopolymers or copolymers of ethylenically unsaturated monomers, wherein at least one ethylenically unsaturated monomer comprises at least one aromatic group and/or at least one pyrrolidone group, for the impact modification of a polymerisation product, comprising at least one polymerisable benzoxazine compound in polymerised form.

## Revendications

1. Composition polymérisable contenant :
a) au moins un composé polymérisable de benzoxazine ; et
b) des particules inorganiques qui présentent une enveloppe organique, l'enveloppe organique comprenant des polymères qui représentent des homopolymères ou des copolymères de monomères à insaturation éthylénique, au moins un de ces monomères à insaturation éthylénique comprenant au moins un groupe aromatique et/ou au moins un groupe de pyrrolidone.

2. Composition selon la revendication 1, **caractérisée en ce que** l'enveloppe organique est constituée par plus d'une couche.

3. Composition selon au moins une des revendications 1 et 2 ou les deux, **caractérisée en ce que** la couche de l'enveloppe organique la plus externe est constituée par des polymères qui représentent des homopolymères ou des copolymères de monomères à insaturation éthylénique, au moins un de ces monomères à insaturation éthylénique comprenant au moins un groupe aromatique et/ou au moins un groupe de pyrrolidone.

4. Composition selon au moins une des revendications 1 à 3, contenant :
a) au moins un composé polymérisable de benzoxazine choisi parmi des composés de N-alkyl-benzoxazine ou N-alcényl-benzoxazine ; et
b) des particules inorganiques qui présentent une enveloppe organique, l'enveloppe organique comprenant des polymères qui représentent des homopolymères ou des copolymères de monomères à insaturation éthylénique, au moins un de ces monomères à insaturation éthylénique comprenant au moins un groupe aromatique

5. Composition selon au moins une des revendications 1 à 4, **caractérisée en ce qu'**au moins un monomère à insaturation éthylénique est choisi parmi le groupe constitué par des composés vinylaromatiques et des esters aromatiques d'acides (méth)acryliques.

6. Composition selon au moins une des revendications 1 à 3, contenant :
a) au moins un composé polymérisable de benzoxazine choisi parmi des composés de N-aryl-benzoxazine ; et
b) des particules inorganiques qui présentent une enveloppe organique, l'enveloppe organique comprenant des polymères qui représentent des homopolymères ou des copolymères de monomères à insaturation éthylénique, au moins un de ces monomères à insaturation éthylénique comprenant au moins un groupe de pyrrolidone.

7. Composition selon au moins une des revendications 1 à 6, **caractérisée en ce que** les polymères de l'enveloppe organique sont non réticules et ou bien sont à faiblement réticulés à un point tel que pas plus de 5 % des unités monomères d'une chaîne sont réticulés avec des unités monomères d'une autre chaîne.

8. Composition selon une ou plusieurs des revendications 1 à 7, **caractérisée en ce que** les particules inorganiques, avant l'application de l'enveloppe organique, présentent une granulométrie moyenne dans la plage de 1 à 1.000 nm, de préférence dans la plage de 5 à 30 nm.

9. Composition selon une ou plusieurs des revendications 1 à 8, **caractérisée en ce que**, dans les particules, le rapport pondéral du noyau inorganique à l'enveloppe organique se situe dans la plage de 2:1 à 1:5, de préférence dans la plage de 3:2 à 1:3.

10. Composition selon au moins une des revendications 1 à 9, **caractérisée en ce que** les particules inorganiques sont choisies parmi des métaux, des oxydes, des hydroxydes, des carbonates, des sulfates et des phosphates et à partir de l'un quelconque de leurs mélanges.

11. Composition selon au moins une des revendications 1 à 10, **caractérisée en ce que** la composition contient les particules inorganiques, qui présentent une enveloppe organique, à concurrence de 0,001 à 60 % en poids, de préférence de 1 à 40 % en poids et de manière tout à fait préférée de 3 à 20 % en poids, chaque fois rapportés à la quantité totale de la composition.

12. Produit de polymérisation de la composition selon au moins une des revendications 1 à 11.

13. Produit de polymérisation selon la revendication 12, **caractérisé en ce que** le produit de polymérisation mentionné enrobe une couche ou un faisceau de fibres, les fibres étant traitées avant le durcissement avec une composition selon au moins une des revendications 1 à 11.

14. Procédé pour la préparation d'un produit de polymérisation selon la revendication 13, comprenant les étapes
a) de procuration d'une couche ou d'un faisceau de fibres ;
b) de procuration d'une composition selon au moins une des revendications 1 à 11 ;
c) de formation d'un système composite par traitement d'une couche ou d'un faisceau de fibres avec la composition ;
d) de manière facultative, l'élimination d'une quantité en excès de la composition polymérisable par rapport au système composite ;
le produit de polymérisation mentionné étant obtenu en exposant le système composite à une température élevée et à une pression élevée.

15. Adhésif, substance d'étanchéité ou agent d'enduction, comprenant une composition selon au moins une des revendications 1 à 11.

16. Utilisation de particules inorganiques qui présentent une enveloppe organique, l'enveloppe organique comprenant des polymères qui représentent des homopolymères ou des copolymères de monomères à insaturation éthylénique, au moins un de ces monomères à insaturation éthylénique comprenant au moins un groupe aromatique et/ou au moins un groupe de pyrrolidone, pour la modification d'un produit de polymérisation en lui conférant une résistance aux chocs, contenant au moins un composé polymérisable de benzoxazine sous forme polymérisée.
